# EUROPÄISCHE PATENTSCHRIFT

(11) **EP 4 185 920 B1**
(45) Veröffentlichungstag und Bekanntmachung des Hinweises auf die Patenterteilung: **08.11.2023**
(21) Anmeldenummer: 21743534.6
(22) Anmeldetag: 22.07.2021
(51) Int. Cl.: G02C 13/00

(54) **COMPUTERIMPLEMENTIERTES VERFAHREN ZUR ERZEUGUNG VON DATEN ZUR HERSTELLUNG MINDESTENS EINES BRILLENGLASES UND VERFAHREN ZUR HERSTELLUNG EINER BRILLE**
COMPUTER-IMPLEMENTED METHOD FOR GENERATING DATA FOR PRODUCING AT LEAST ONE SPECTACLE LENS AND METHOD FOR MANUFACTURING SPECTACLES
PROCÉDÉ MISE EN UVRE PAR ORDINATEUR DE GÉNÉRATION DE DONNÉES DESTINÉES À LA FABRICATION D'AU MOINS UN VERRE DE LUNETTES ET PROCÉDÉ DE FABRICATION DE LUNETTES

(30) Priorität: 23.07.2020 EP 20187511
(43) Veröffentlichungstag der Anmeldung: 31.05.2023
(73) Patentinhaber: Carl Zeiss Vision International GmbH, 73430 Aalen (DE)
(72) Erfinder: MESCHENMOSER, Ralf, 73457 Essingen (DE); PAUKER, Friedrich, 86420 Diedorf (DE); KELCH, Gerhard, 73434 Aalen (DE)
(74) Vertreter: Altmann Stößel Dick Patentanwälte PartG mbB
(86) Internationale Anmeldenummer: PCT/EP2021/070553
(87) Internationale Veröffentlichungsnummer: WO 2022/018212

(56) Entgegenhaltungen:
- WO-A1-2017/205903
- WO-A2-01/88654
- DE-A1-102007 020 031
- US-A1- 2020 211 218
- "IMPRESSIONIST - DAS 4-IN-1 INTEGRIERTE SERVICE-TERMINAL VON RODENSTOCK", DEUTSCHE OPTIKER ZEITUNG, XX, DE, 1. Januar 2006 (2006-01-01), Seiten 56-61, XP000962763,

## Beschreibung

### Gebiet der Erfindung

Die vorliegende Erfindung betrifft ein computerimplementiertes Verfahren zur Erzeugung von Daten zur Herstellung eines an eine Brillenfassung einer Brille angepassten mindestens einen Brillenglases, ein Computerprogramm zur Durchführung des computerimplementierten Verfahrens, ein Verfahren zur Herstellung einer Brille unter Verwendung der in dem computerimplementierten Verfahren erzeugten Daten und ein System zur Herstellung eines an eine Brillenfassung einer Brille angepassten mindestens einen Brillenglases.

### Stand der Technik

Die Norm DIN EN ISO 13666:2019-12 definiert grundlegende Begriffe der Augenoptik, insbesondere Begriffe für Brillenglas-Halbfertigprodukte, die auch als "Brillenglasblanks" oder "Brillenglasrohlinge" bezeichnet werden, bezieht sich auf fertige Brillengläser, insbesondere auf eine Vielzahl von Parametern, welche sich auf die fertigen Brillengläser oder auf eine von einem Nutzer der Brille ausgewählte Brillenfassung zur zumindest Einbringung der Brillengläser beziehen, und legt Verfahren zur Anpassung der Brillengläser an den Nutzer der Brille und an die von dem Nutzer ausgewählte Brillenfassung fest. Bezugnahmen auf die Norm sind in der vorliegenden Erfindung jeweils als Bezugnahmen auf die DIN EN ISO 13666:2019-12 zu verstehen.

Unter Anwendung der Norm erfolgt eine Anpassung der Brillengläser an die von dem Nutzer ausgewählte Brillenfassung üblicherweise im Rahmen eines Besuches des Nutzers bei einem Augenoptiker gemäß folgender Abfolge mit nachstehend angegebenen Verfahrensschritten durchgeführt:
- "Bestimmung der Korrektion": Durchführung einer subjektiven Refraktion zur Bestimmung einer erforderlichen Korrektion von Refraktionsfehlern der Augen des Nutzers der Brille, wobei auf bereits bekannte messtechnisch erfasste Werte, zum Beispiel aus einem Brillenpass des Nutzers, zurückgegriffen und/oder wobei eine objektive Refraktion beider Augen des Nutzers durch Durchführung einer Refraktions-bestimmung mittels eines bekannten Refraktometers ermittelt werden kann;
- "Auswahl einer Brillenfassung": Auswahl mindestens einer Brillenfassung durch den Nutzer;
- "Bestimmung von Zentrierdaten": Erstellen einer Zentrieraufnahme mit von dem Nutzer aufgesetzter Brillenfassung unter habitueller Kopf- und Körperhaltung und festgelegter Blickrichtung des Nutzers durch in die Brillenfassung eingebrachte Stützscheiben, wobei implizit bereits eine Festlegung eines Glastyps für die Brillengläser und damit implizit einer zugehörigen Zentriervorschrift zur Anpassung der Brillengläser an die Brillenfassung erfolgt; und
- "Glasauswahl": Auswahl eines Glases durch Nutzer und Augenoptiker, wobei die "Glasauswahl" Eigenschaften des Glases festlegt, insbesondere den Glastyp, einen Brechungsindex, eine Tönung und mindestens eine optionale Beschichtung eines Brillenglases, wobei der Glastyp in die Bestimmung der Zentriervorschrift eingeht.

Gemäß der Norm werden die Zentrierdaten in Bezug auf ein Brillenfassungskoordinatensystem und/oder ein Glaskoordinatensystem angegeben. Diese sind jedoch im Allgemeinen nicht exakt parallel und/oder senkrecht im Raum ausgerichtet. Eine Kopfseitenneigung kann daher dazu führen, dass eine Achslage eines Brillenglases in Trageposition von der Achslage abweicht, die bei der Durchführung einer Refraktions-bestimmung in Bezug auf den Kopf des Nutzers ermittelt wurde. Hierbei wird im Allgemeinen der Kopf des Nutzers in eine neutrale Stellung gezwungen, welche sich an der Vertikalen des verwendeten Refraktometers orientiert. Zudem orientiert sich der Augenoptiker beim Formranden der Brillengläser an der Horizontalen der Brillenfassung.

Genauso verhält es sich, wenn der Augenoptiker am Ende des Zentriervorganges eine Markierung auf jeweiligen Brillenglas pauschal in eine vertikale Richtung verschiebt, wodurch er implizit auch die Richtung des Durchblicks durchs Brillenglas ändert. Diese Verschiebung wird jedoch dem Hersteller des Brillenglases nicht mitgeteilt, sondern die Berechnung des Brillenglases und die darauf basierende Fertigung der Brillengläser erfolgt für eine von der angenommenen, habituellen Trageposition abweichenden Blickrichtung.

Vergleichbare Probleme können bei einer virtuellen Zentrierung auftreten. Hierbei wird von dem Augenoptiker zunächst ein virtuelles Modell eines Ausschnitts des Nutzers, insbesondere vom Kopf des Nutzers, das auch als "Avatar" bezeichnet wird, erstellt, und zwar unter den gleichen Bedingungen wie bei der Erstellung der Zentrieraufnahme. Die Erstellung des Avatars erfolgt jedoch, ohne dass der Nutzer zum Zeitpunkt der Erstellung des Avatars eine Brille trägt, insbesondere um die Auswahl der Brillenfassung räumlich und zeitlich vom dem Besuch des Nutzers bei dem Augenoptiker zu entkoppeln. Damit kann der Nutzer den Avatar mittels einer internetbasierten Anwendung derart verwenden, um beispielsweise von zu Hause aus dem Avatar Brillenfassungen, die als räumliches digitalisiertes Modell verfügbar sind, aufzusetzen und auszuwählen. Da es jedoch sein kann, dass der Nutzer zum Zeitpunkt der Erstellung des Avatars keine Brille trägt, ist ein Bestimmen von Zentrierdaten nicht möglich. Die Glasauswahl kann ebenfalls, insbesondere aufgrund der zu diesem Zeitpunkt fehlenden Daten zu Material und Gestaltung der Brillengläser erst nach der erfolgten Auswahl der Brillenfassung erfolgen. Die Zentrierdaten können erst hieran anschließend bestimmt werden, entweder als so genannte "virtuelle Zentrierung" anhand eines auf den Avatar aufgesetzten räumlichen Modells der Brillenfassung oder als so genannte "reale Zentrierung" nach erfolgter Fertigung und Bereitstellung der Brillenfassung auf Basis des räumlichen Modells der Brillenfassung vor Ort beim Augenoptiker. Hierbei können weitere Probleme auftreten, wenn der Augenoptiker nur einige der verwendbaren Modelle für Brillenfassungen physisch vorrätig hält und daher die Zentrierdaten nicht vollständig ermittelt werden können. Nachteilig an beiden Ausgestaltungen ist, dass die Bestimmung der Zentrierdaten vor der Bereitstellung der Brillengläser erfolgen muss.

WO 2005/069063 A1 offenbart eine Vorrichtung zum Ermitteln von Zentrierdaten für eine Brille mit einer von einem Computer aus ansteuerbaren, elektronische Bilder aufnehmenden Aufnahmeeinheit, die hinter einem Teilerelement angeordnet ist und mit einer Fixationseinrichtung. Die Fixationseinrichtung erzeugt zumindest ein Speckle-Muster. Durch die konstruktiven Eigenschaften der Fixationseinrichtung ist gewährleistet, dass der Blick des Probanden in eine vorbestimmte Richtung orientiert ist. Die Speckles können mit verschiedenen Mustern, z.B. einem kreuzförmigen Muster, superponiert werden. Die Erfindung betrifft zudem ein Verfahren zum Ermitteln von Zentrierdaten. Mit dem erfindungsgemäßen Verfahren und Vorrichtung wird es für Testpersonen unterschiedlichster Sehstärke ermöglicht, die relativen Zentrierdaten bei habitueller Haltung aus kurzer Entfernung zu messen.

DE 10 2008 012 268 A1 offenbart eine Vorrichtung und ein Verfahren zum dreidimensionalen Darstellen von Darstellungsbilddaten, insbesondere zum Positionieren eines Probanden, umfassend zumindest eine Bildaufnahmeeinrichtung, welche dazu ausgelegt ist, Bilddaten zumindest eines Teilbereichs eines Kopfes eines Probanden zu generieren, zumindest eine Bilddarstellungseinrichtung, welche dazu ausgelegt ist, Darstellungsbilddaten derart dreidimensional darzustellen, dass ein Fixationstarget dreidimensional dargestellt ist und/oder ein Teilbereich des Kopfes des Probanden beleuchtet ist und/oder Informationsdaten dreidimensional dargestellt sind, und zumindest eine Datenverarbeitungseinrichtung, welche dazu ausgelegt ist, mittels der Bilddaten Parameterdaten des Probanden zu bestimmen.

DE 10 2016 004 430 A1 offenbart ein Verfahren zum Bestimmen von optischen Parametern eines Probanden sowie ein Computerprogrammprodukt zum Durchführen des Verfahrens. Das Verfahren umfasst die Schritte: Erzeugen von Bilddaten zumindest von Teilbereichen eines Systems des Kopfes des Probanden und einer daran in Gebrauchsstellung angeordneten Brillenfassung; und iteratives Bestimmen der optischen Parameter durch ein Auswerten der erzeugten Bilddaten, wobei das Auswerten der erzeugten Bilddaten eine computergestützte automatische Bildverarbeitung der Bilddaten und ein Ausführen einer von einem Benutzer des Videozentriersystems festlegbaren Anzahl einer Vielzahl von vorgegebenen manuellen Bildselektionsschritten umfasst, und wobei die Anzahl von Iterationsschritten, welche bei der iterativen Bestimmung der optischen Parameter ausgeführt werden, von der Anzahl der vom Benutzer ausgeführten manuellen Bildselektionsschritte abhängt.

DE 10 2016 113 374 B3 offenbart ein Verfahren zum Bestimmen eines Fern-Durchblickpunkts auf einem in einer Brillenfassung aufnehmbaren Brillenglas, die eine Fassungsebene hat, bei dem ein in einer Bildebene liegendes Bild wenigstens eines Abschnitts einer einem Proband aufgesetzten Brillenfassung mit einer eine optische Achse aufweisenden Kamera erfasst wird, während der Proband mit einer die Fassungsebene durchsetzenden Blickrichtung wenigstens eines Auges in die Kamera blickt, bei dem ein auf die Lage der Bildebene bezogener Vorneigungswinkel der Brillenfassung ermittelt wird, er entsprechend dem erfassten Neigungswinkel der Bildebene gegenüber der vertikalen Richtung zu einem auf die vertikale Richtung bezogenen Vorneigungswinkel korrigiert wird, bei dem ein von der optischen Achse der Kamera mit einer zu der Abstandslinie der Pupillen der Augen des Probanden senkrechten Ebene gebildeter Kopfdrehwinkel des Kopfs des Probanden ermittelt wird, bei dem der Kopfdrehwinkel entsprechend dem erfassten Neigungswinkel der Bildebene gegenüber der vertikalen Richtung zu einem einer horizontalen Ausrichtung der optischen Achse der Kamera entsprechenden korrigierten Kopfdrehwinkel korrigiert wird, bei dem der Fern-Durchblickpunkt durch Analysieren des in der Bildebene liegenden Bilds unter Berücksichtigung des einer horizontalen Ausrichtung der optischen Achse der Kameraentsprechenden korrigierten Kopfdrehwinkels bestimmt wird und bei dem der Schnittpunkt der Blick-richtung mit der Fassungsebene mittels Bildauswertung bestimmt wird.

EP 3 422 087 A1 offenbart Verfahren und Vorrichtungen zur Korrektur von Zentrierparametern und/oder einer Achslage einer sphärozylindrischen Refraktion auf Basis einer habituellen Kopfhaltung. Dabei wird eine Repräsentation des Kopfs auf einer Anzeige dargestellt, wodurch ein Einstellen einer habituellen Kopfhaltung intuitiv möglich ist.

EP 3 425 446 A1 offenbart ein Verfahren zur virtuellen Brillenanpassung sowie ein entsprechendes Computerprogramm und eine Recheneinrichtung. Dabei werden erste Messpunkte an einem 3D-Modell eines Kopfes einer Person definiert, und ein Modell einer Brillenfassung wird auf Basis der ersten Messpunkte angepasst. Erfindungsgemäß umfasst das Definieren der ersten Messpunkte ein Definieren von zweiten Messpunkten an einem parametrischen Kopfmodell, ein Anpassen des parametrischen Kopfmodells an das 3D-Modell des Kopfes der Person und ein Bestimmen der ersten Messpunkte auf Basis der zweiten Messpunkte und dem Anpassen. Auf diese Weise müssen die zweiten Messpunkte nur einmal an dem parametrischen Kopfmodell definiert werden, um die ersten Messpunkte für eine Vielzahl verschiedener 3D-Modelle von verschiedenen Köpfen definieren zu können.

US 2010/0128220 A1 offenbart ein Verfahren und eine Vorrichtung zur Messung der Position von ausgezeichneten Punkten des Auges eines Nutzers. Das Verfahren umfasst hierbei einen Verfahrensschritt zur Aufnahme von Abbildungen in verschiedenen relativen Positionen des Nutzers, um damit Referenzpunkte des Auges zu ermitteln und den ausgezeichneten Punkt als Funktion der Abbildungen zu bestimmen. Die Werte der Haltungsparameter werden mittels eines positionsbestimmenden Elements erhalten, welches wenigstens eine bekannte geometrische Ausprägung, die am Kopf des Nutzers befestigt wird, aufweist. Jede der aufgenommenen Abbildungen umfasst eine Darstellung des positionsbestimmenden Elements. Der Haltungsparameter wird als Funktion der aufgenommenen Abbildungen und der bekannten geometrischen Ausprägung ermittelt.

US 2014/253875 A1 offenbart ein Verfahren zur Bestimmung okularer und optischer Messungen zur Herstellung und Anpassung von korrektiven Brillengläsern für einen Nutzer mittels einer Kamera. Das Verfahren verwendet ein Protokoll zur Rekonstruktion des Augensystems in drei Dimensionen durch Modellierung des Augensystems, um genaue okulare und optische Messungen bereitzustellen. Das Verfahren verwendet Testobjekte, welche mit dem Gesicht des Nutzers verbunden oder nicht verbunden sind.

EP 0 562 336 A1 offenbart eine Brillenlinse mit Mehrstärkenfläche und Rezeptfläche, die sich dadurch auszeichnet, dass die Rezeptfläche eine allgemeine asphärische Fläche ohne Punkt- und Achsensymmetrie ist. Bei der Bestimmung der Geometrie der Rezeptfläche ist dabei von den individuellen Gebrauchsbedingungen zumindest die dioptrische Wirkung flächig berücksichtigt. Dabei dient die Rezeptfläche ausschließlich zur Erzeugung der dioptrischen Wirkung in den Bezugspunkten und zusätzlich zur Beseitigung von Bildfehlerzuwächsen.

EP 0 857 993 B2 offenbart ein Verfahren zur Herstellung von Brillenlinsen mit einer Gleitsichtfläche, wobei die Brillenlinse aus Halbfabrikaten mit sphärischen oder asphärisch rotationssymmetrischen konvexen Vorderflächen mit wenigen unterschiedlichen Radien so hergestellt werden, dass die gesamte individuell erforderliche dioptrische Wirkungsanpassung mit der als Gleitsichtfläche ohne Punkt- und Achsensymmetrie ausgebildeten Rückfläche der Brillenlinse erfolgt, wobei ausgehend von einer vorher bestimmten Startfläche mindestens eine individuelle Optimierung der Form der Rückfläche für den späteren Nutzer vorgenommen wird, und als Randbedingung für die Optimierung der Hornhautscheitelabstand und/oder die unterschiedlicher Größenwahrnehmung beider Augen und/oder die Vorneigung der Fassung und/oder die Fassungsform und/oder die Zentrierung und/oder die Pupillendistanz und/oder spezielle Gebrauchssituationen eingehen.

WO 2001/084215 A1 offenbart ein Verfahren zur Herstellung einer Brille, die individuelle progressive Brillengläser aufweist, mit folgenden Schritten:
- Auswahl einer Brillenfassung;
- Erfassen der Form der Gläserringe mit einer Genauigkeit in x- und y-Richtung von besser als ± 0,5 mm (Datensatz 1);
- Erfassen der Durchstoßpunkte der Sehstrahlen durch die Ebene der Gläserringe für wenigstens zwei Auslege-Entfernungen der progressiven Brillengläser mit einer Genauigkeit von besser als ± 1 mm (Datensatz 2);
- Auswahl und Positionierung in Bezug auf die Gläserringe einer sphärischen oder asphärischen Fläche im Hinblick auf die Rezeptdaten und unter Verwendung der Datensätze 1 und 2 (Datensatz 3);
- Berechnung und Positionierung der progressiven Fläche relativ zu der ausgewählten Fläche unter Minimierung der kritischen Dicke des Brillenglases und unter Verwendung der Datensätze 1 bis 3 (Datensatz 4);
- Fertigung der progressiven Flächen sowie Randung der Brillengläser aus einem einseitig fertigen, nicht gerandeten Halbprodukt unter Verwendung der Datensätze 1 bis 4.

WO 2001/88654 A2 offenbart ein Brillenanpassungssystem mit einem Weitsicht-Bildgebungssystem, das eine Weitsicht des Gesichts eines Kunden liefert, einem 3D-Bildprozessor, der erste 3D-Informationen erzeugt, welche die physischen Merkmale des Kunden beschreiben, einer virtuellen Anprobeeinheit, welche die digitale 3D-Darstellung des Gesichts des Kunden und eine digitale 3D-Darstellung einer Brillenfassung empfängt, um die Brillenfassung virtuell auf das Gesicht des Kunden aufzusetzen und zweite 3D-Informationen zu erzeugen, welche den Sitz der Brillenfassung im Gesicht beschreiben, und einen Linsenanpassungseinrichtung, welche die ersten 3D-Informationen und die zweiten 3D-Informationen empfängt und hieraus mindestens einen Parameter für in Bezug auf die Brillenfassung und das Gesicht kundenspezifische Herstellung und Schneiden der Linse erzeugt.

*ImpressionIST* - *Das 4-in-1 Integrierte Service-Terminal von Rodenstock,* Deutsche Optiker Zeitung, 1-2006, Seiten 56-61, beschreibt ein Beratungs- und 3-D Videozentriersystem, insbesondere für individuelle Brillengläser. Das System liefert mit einer dreidimensionalen Vermessung der individuellen Parameter und der Zentrierdaten des Kunden die Grundlage für eine Leistungsfähigkeit der individuellen Brillengläser. Des Weiteren wird dem Augenoptiker durch die integrierten Servicefunktionen ein Beratungssystem zur Verfügung gestellt, mit dem er seinen Kunden die Vorteile individuell optimierter Brillengläser demonstrieren kann, insbesondere durch eine integrierte Glas-und Fassungsberatung sowie eine Fassungspräsentation für den Kunden.

US 2020/211218 A1 offenbart ein Verfahren zum automatischen Bestimmen mindestens eines Parameters, der mit einer von einer Person ausgewählten ophthalmologischen Vorrichtung verbunden ist, wobei die Vorrichtung einen Rahmen umfasst, der als ausgewählter Rahmen bezeichnet wird, wobei die Bestimmung aus einem erfassten Bild des Gesichts der Person, die den ausgewählten Rahmen oder einen Rahmen einer zweiten ophthalmologischen Vorrichtung trägt, durchgeführt wird. Das Verfahren umfasst die folgenden Schritte: Erfassen mindestens eines charakteristischen Punktes mindestens eines Auges des Individuums in dem erfassten Bild und Schätzen der dreidimensionalen Position des mindestens einen erfassten charakteristischen Punkts; Erfassen des getragenen Rahmens und Schätzen der dreidimensionalen Position des getragenen Rahmens durch Ausrichten einer dreidimensionalen Darstellung des getragenen Rahmens mit dem getragenen Rahmen in dem erfassten Bild; und Bestimmen des mindestens einen Parameters aus der relativen Position der Augen in Bezug auf die dreidimensionale Darstellung des ausgewählten Rahmens.

WO 2017/205903 A1 offenbart ein optisches Messsystem zur Anpassung einer Brille an ein Subjekt oder zur Diagnose oder Überwachung von Augenkrankheiten oder -störungen in dem Subjekt sowie Verfahren zu dessen Verwendung. Das System umfasst mindestens eine Bilderfassungsvorrichtung zum Erfassen mindestens eines Bildes von mindestens einem Teil des Gesichts des Subjekts. Das System umfasst auch mindestens eine bewegliche Halterung zum Anbringen der Bilderfassungsvorrichtung vor dem Subjekt und zum Bewegen der Bilderfassungsvorrichtung relativ zu dem Subjekt; und mindestens einen Prozessor, der operativ mit der Bilderfassungsvorrichtung verbunden ist, um ein dreidimensionales (3D) Modell des mindestens einen Teils des Gesichts des Subjekts zu erzeugen. Der mindestens eine Prozessor ist auch konfiguriert, um aus dem erzeugten 3D-Modell mindestens optische Messung in Bezug auf das Subjekt zu bestimmen.

Trotz der Vorteile der bekannten Verfahren zur Herstellung einer Brille beinhalten diese noch erhebliches Verbesserungspotenzial. Üblicherweise können sich bei den oben genannten Verfahren Abweichungen, Fehler und/oder Toleranzen addieren. Dies kann dazu führen, dass die angefertigte Brille nicht den Anforderungen des Nutzers entspricht, obwohl die Brillengläser dazu eingerichtet sind, den mindestens einen Refraktionsfehler des Nutzers zutreffend zu korrigieren. Insbesondere kann es bei dem Nutzer zu einer Unverträglichkeit kommen, in Folge welcher der Nutzer die angefertigte Brille nur ungern trägt und insbesondere dem Augenoptiker gegenüber eine Reklamation in Bezug auf die angefertigte Brille vorbringt.

DE 10 2007 020 031 A1 betrifft eine Brille mit einer Brillenfassung, einem ersten Brillenglas, nachfolgend als linkes Brillenglas bezeichnet, und einem zweiten Brillenglas, nachfolgend als rechtes Brillenglas bezeichnet, wobei das linke Brillenglas derart an der Brillenfassung angeordnet ist, dass das linke Brillenglas von einer linken Fassungsrandkurve der Brillenfassung zumindest teilweise umgrenzt ist, jedes Brillenglas zwei gegenüberliegende Flächen aufweist, wobei eine Fläche nachfolgend als augenseitige Fläche und die andere Fläche nachfolgend als objektseitige Fläche bezeichnet ist, die objektseitige Fläche des linken Brillenglases ausgebildet ist, dass eine erste linke Ebene die objektseitige Fläche des linken Brillenglases entlang einer ersten linken Schnittlinie schneidet, die erste linke Schnittlinie von einer Projektion der linken Fassungsrandkurv auf die erste linke Ebene einen maximalen Abstand und einen minimalen Abstand aufweist, die Differenz zwischen dem maximalen Abstand und dem minimalen Abstand geringer als ein vorgegebener Grenzwert ist, wobei die erste linke Ebene parallel zu einer Symmetrieebene der Brillenfassung ist und das linke Brillenglas in einem vorgegebenen Schnittpunkt schneidet und wobei der vorgegebene Schnittpunkt ein Punkt aus der Menge der folgenden Punkte des linken Brillenglases ist: Zentrierpunkt, Prismenzentrierpunkt, Anpaßpunkt, Fernbezugspunkt, Nahbezugspunkt, geometrischer Mittelpunkt des linken Brillenglases im Kastenmaß oder ein vorgegebener Symmetriebezugspunkt.

### Aufgabe der Erfindung

Vor dem Hintergrund insbesondere der Norm DIN EN ISO 13666:2019-12 besteht die Aufgabe der vorliegenden Erfindung darin, ein computerimplementiertes Verfahren zur Erzeugung von Daten zur Herstellung eines an eine Brillenfassung einer Brille angepassten mindestens einen Brillenglases, ein Computerprogramm zur Durchführung des computerimplementierten Verfahrens, ein Verfahren zur Herstellung einer Brille und ein System zur Herstellung eines an eine Brillenfassung einer Brille angepassten mindestens einen Brillenglases bereitzustellen, welches die aufgeführten Nachteile und Einschränkungen des Standes der Technik zumindest teilweise überwindet.

### Offenbarung der Erfindung

Diese Aufgabe wird gelöst durch ein computerimplementiertes Verfahren zur Erzeugung von Daten zur Herstellung eines an eine Brillenfassung einer Brille angepassten mindestens einen Brillenglases, ein Computerprogramm zur Durchführung des computerimplementierten Verfahrens, ein Verfahren zur Herstellung einer Brille und ein System zur Herstellung eines an eine Brillenfassung einer Brille angepassten mindestens einen Brillenglases mit den Merkmalen der unabhängigen Patentansprüche. Bevorzugte Ausgestaltungen, welche einzeln oder in Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht) als auch auf die Situation, in welcher, zusätzlich zu B, ein oder mehrere weitere Elemente in A vorhanden sind, beispielsweise Element C, Elemente C und D oder sogar weitere Elemente.

In einem ersten Aspekt betrifft die vorliegende Erfindung ein computerimplementiertes Verfahren Erzeugung von Daten zur Herstellung eines an eine Brillenfassung einer Brille angepassten mindestens einen Brillenglases. Der Begriff der "Brille" bezeichnet hierbei ein Element, welches mindestens ein Brillenglas, bevorzugt zwei einzelne Brillengläser, und eine Brillenfassung umfasst, wobei das mindestens eine Brillenglas zur Einbringung in eine Brillenfassung vorgesehen ist, welche von einem Nutzer der Brille ausgewählt wird. Alternativ kann das mindestens eine Brillenglas als rahmenloses Brillenglas verwendet werden. Anstelle des hier verwendeten Begriffs des "Nutzers" kann gleichbedeutend auch einer der Begriffe "Subjekt", "Brillenträger", "Benutzer" oder "Proband" verwendet werden.

Unter einem "Brillenglas" wird eine optische Linse verstanden, welche gemäß der Norm zur Korrektion von Fehlsichtigkeiten und/oder zum Schutz des Auges oder zur Änderung eines Aussehens eines Nutzers dienen soll, wobei die optische Linse vor dem Auge des Nutzers, aber nicht in Kontakt mit dem Auge getragen wird. Die als Brillenglas eingesetzte optische Linse kann hierbei eine Vorderfläche, eine Rückfläche und einen zwischen der Vorderfläche und der Rückfläche angeordneten so genannten "Rand" umfassen, wobei die "Vorderfläche" eine augenabgewandte Fläche des Brillenglases und die "Rückfläche" eine augenseitige Fläche des Brillenglases bezeichnen. Weiterhin kann ein Brillenglas mindestens einem "Glastyp" zugeordnet werden, ausgewählt aus einem Einstärken-Brillenglas, einem Mehrstärken-Brillenglas, insbesondere einem Zweistärken-Brillenglas oder einem Dreistärken-Brillenglas, einem Gleitsicht-Brillenglas oder einem degressiven Brillenglas. Andere Glastypen von Brillengläsern sind jedoch denkbar. Vorzugsweise kann das Brillenglas ein optisch transparentes Material, insbesondere ausgewählt aus Glas, oder einem transparenten organischen Kunststoff, jeweils mit unterschiedlichen, wählbaren Brechungsindizes, aufweisen.

Die "Brillenfassung" ist zur festen Aufnahme des mindestens einen Brillenglases, bevorzugt der beiden einzelnen Brillengläser, eingerichtet. Hierzu kann die Brillenfassung über eine, üblicherweise als "Brillenfassungsrahmen" bezeichneten Rahmen verfügen, welcher rechts- und/oder linksseitig jeweils eine Aufnahme für das mindestens eine Brillenglas, bevorzugt je eines der beiden Brillengläser, aufweist. Vorzugsweise kann der Brillenfassungsrahmen ein transparentes oder nicht-transparentes Material, insbesondere ein festes, jedoch flexibles und leichtes Material aufweisen. Hierbei können "Vollrandbrillen", welche einen das mindestens eine Brillenglas, bevorzugt die beiden Brillengläser, umschließenden Brillenfassungsrahmen aufweisen, von "Halbrandbrillen", in denen das mindestens eine Brillenglas, bevorzugt die beiden Brillengläser, nur teilweise an den Brillenfassungsrahmen angrenzen, und von "rahmenlosen Brillen", in welchen das mindestens eine Brillenglas, bevorzugt die beiden Brillengläser, über eine Bohrung zur Aufnahme einer Halterung zur Befestigung an dem Brillenfassungsrahmen verfügt, unterschieden werden. Darüber hinaus kann die Brillenfassung weitere Komponenten umfassen, insbesondere mindestens ein Brillenbügel zum Tragen der Brille an einem Ohr und/oder mindestens eine Auflage (Pad) an einer Nase eines Nutzers der Brille.

Im Falle von Vollrandbrillen ist jede Aufnahme für die Brillengläser geschlossen und kann somit bevorzugt eine im Inneren des Brillenfassungsrahmens umlaufende Nut aufweisen. Die Brillenfassung verfügt in diesem Falle somit über eine "Innenkontur", womit ein Profil einer im Inneren des Brillenfassungsrahmens umlaufenden Form bezeichnet wird. Auf diese Weise kann ein räumlicher Verlauf zumindest eines zur Aufnahme der Brillengläser eingerichteten Teils der Brillenfassung über eine so genannte "Fassungsrandkurve" angegeben werden. Bei Halbrandbrillen ist in der augenabgewandten Vorderfläche der Brillenfassung die Fassungsrandkurve oder Randkurve gleich dem vorderseitig liegenden Glasaußenrand oder dem Fassungsinnenrand, soweit eine durch die Fassung gegebene Struktur gegeben ist. Soweit bei Halbrandbrillen keine durch die Fassung gegebene Struktur gegeben ist, ist in der augenabgewandten Vorderfläche der Brillenfassung die Randkurve gleich dem vorderseitig liegenden Glasaußenrand. Bei rahmenlosen Brillen gibt es keine analoge Struktur der Fassung, d. h. der Begriff "Randkurve" bezeichnet hier in der augenabgewandten Vorderfläche der Brillenfassung immer den vorderseitig liegenden Glasaußenrand. Der Begriff "Randkurve" kann somit nachstehend synonym für die Begriffe "Glasaußenrand" und "Fassungsinnenrand" verwendet werden, je nachdem ob der Begriff im Zusammenhang mit dem Brillenglas oder mit der Brillenfassung steht.

Das vorliegende computerimplementierte Verfahren umfasst hierbei die folgenden Schritte (i) bis (iii), vorzugsweise in der angegebenen Reihenfolge. Auch eine andere Reihenfolge ist grundsätzlich möglich. Ferner ist eine zumindest teilweise zeitgleiche Ausführung von Verfahrensschritten, insbesondere von aufeinanderfolgenden Verfahrensschritten, möglich. Weiterhin können einzelne, mehrere oder alle Schritte des Verfahrens wiederholt, insbesondere mehr als einmal, beispielsweise iterativ, ausgeführt werden. Das Verfahren kann, zusätzlich zu den genannten Verfahrensschritten auch weitere in diesem Dokument erwähnte oder nicht erwähnte Verfahrensschritte umfassen. Die Verfahrensschritte des computerimplementierten Verfahrens sind wie folgt:
(i) Bereitstellen mindestens eines auf einem Speichermedium gespeicherten ersten Datensatzes, wobei der erste Datensatz zumindest folgende Datenwerte umfasst:
   - mindestens einen Zentrierwert;
   - ein dreidimensionales Modell der Brillenfassung;
(ii) Erstellen mindestens eines auf einem Speichermedium gespeicherten zweiten Datensatzes unter Verwendung des mindestens einen ersten Datensatzes, wobei der zweite Datensatz zumindest folgende Datenwerte umfasst:
   - mindestens einen geometrischen Wert mindestens einer Fläche des mindestens einen Brillenglases;
(iii) Erstellen mindestens eines auf einem Speichermedium gespeicherten dritten Datensatzes zum Herstellen des mindestens einen Brillenglases aus mindestens einem Brillenglasrohling und zum Einschleifen und/oder Einbringen des mindestens einen Brillenglases in die Brillenfassung unter Verwendung des mindestens einen ersten Datensatzes und des mindestens einen zweiten Datensatzes,
wobei die Datenwerte jedes Datensatzes dadurch einen räumlichen Bezug zueinander aufweisen, dass die Datenwerte jedes Datensatzes durchgehend in Bezug auf ein jeweiliges Koordinatensystem angegeben werden, wobei alle Datenwerte jedes Datensatzes in einem für alle Datensätze gemeinsamen Koordinatensystem angegeben werden .

Der Begriff des "Datensatzes" bezeichnet im Zusammenhang mit der vorliegenden Erfindung eine Mehrzahl an Datenwerten, die auf messtechnisch erfassten Messwerten und/oder auf bereits vorhandenen Daten, insbesondere dreidimensionalen Konstruktionsdaten basieren können, und/oder aus derartigen Werten ermittelt werden, und die dadurch inhaltlich in einem Zusammenhang stehen, dass sie sich auf den Nutzer und/oder das mindestens eine Brillenglas und/oder die Brillenfassung beziehen. Hierbei können mindestens zwei Datensätze auch zu einem weiteren Datensatz zusammengefasst werden oder gemeinsam vorliegen. Der Datensatz liegt in digital in auf einem Speichermedium gespeicherter Form vor. Als "Speichermedium" kann hierbei jedes computerlesbare Speichermedium dienen, unabhängig davon, an welchem Ort es sich befindet und auf welche Weise es zugänglich ist, solange seine Kapazität zur Speicherung der Datensätze im Rahmen der vorliegenden Erfindung ausreicht. Jeder Datenwert kann mindestens einen numerischen Wert oder einen alphanumerischen Wert aufweisen, wobei, wie unten näher erläutert, jeder Datenwert jeweils in Bezug auf ein ausgewähltes Koordinatensystem angegeben wird. Es wird darauf hinwiesen, dass die Ordnungszahlen "erster", "zweiter" oder "dritter" lediglich zur eindeutigen Kennzeichnung der unterschiedlichen Datensätze verwendet werden, wobei die Ordnungszahlen weder eine Reihenfolge noch eine Rangfolge angeben.

Gemäß der vorliegenden Erfindung weisen die Datenwerte jedes Datensatzes einen räumlichen Bezug zueinander auf. Der Begriff des "räumlichen Bezugs" bezeichnet im Allgemeinen eine Beziehung zwischen mindestens zwei Datenwerten, die sich jeweils auf mindestens eine Koordinate einer räumlichen Position beziehen, wobei die Beziehung derart ausgestaltet ist, dass die räumlichen Positionen, die durch die mindestens zwei Datenwerte angegeben werden, zueinander eindeutig durch mindestens einen Abstand und/oder mindestens einen Winkel charakterisiert werden können. Beispielsweise kann sich mindestens ein Datenwert eines ersten Datensatzes auf eine erste räumliche Position beziehen, die mindestens einen Abstand und/oder mindestens einen Winkel in Bezug auf eine Brillenfassung angibt, während sich mindestens ein Datenwert eines zweiten Datensatzes auf eine zweite räumliche Position beziehen kann, die mindestens einen Abstand und/oder mindestens einen Winkel in Bezug auf ein Brillenglas angibt. Der mindestens eine Datenwert des ersten Datensatzes und der mindestens eine Datenwert des zweiten Datensatzes weisen dann einen räumlichen Bezug auf, wenn sich mindestens ein Abstand und/oder mindestens ein Winkel eindeutig angeben lassen, welche eine relative Lage der ersten räumlichen Position in Bezug auf die Brillenfassung und zu der zweiten räumliche Position in Bezug auf das Brillenglas zueinander charakterisieren. Weitere Beispiele, die insbesondere im Rahmen der vorliegenden Erfindung verwendet werden können, die sich z.B. auf die räumliche Position in Bezug auf eine Bearbeitungsvorrichtung beziehen, sind denkbar.

Erfindungsgemäß wird der räumliche Bezug die Datenwerte jedes Datensatzes dadurch erreicht, dass die Datenwerte jedes Datensatzes in Bezug auf ein jeweiliges Koordinatensystem angegeben werden, wobei alle Datenwerte jedes Datensatzes in einem für alle Datensätze gemeinsamen Koordinatensystem angegeben werden. Der Begriff des "Koordinatensystems" bezeichnet im Rahmen der vorliegenden Erfindung eine Einrichtung, die zur eindeutigen Angabe einer Position eines Punktes in einem dreidimensionalen Raum eingerichtet ist, wobei die Position des Punktes mittels eines numerischen oder alphanumerischen Tripels in Bezug auf das ausgewählte Koordinatensystem angegeben werden kann. Vorzugsweise kann hierbei einem kartesischen Koordinatensystem mit drei, räumlich jeweils senkrecht zueinander angeordneten Koordinaten x, y, z verwendet werden. Alternativ kann hier ein zylindrisches Koordinatensystem eingesetzt werden, in welchem die Position durch einen Abstand r in Bezug auf eine Richtung z, einen Wert für einen Winkel Φ auf einer, senkrecht zur Richtung z befindlichen Ebene und einen Wert ρ für eine Höhe h über der Ebene angegeben wird. Ein Einsatz eines anderen Koordinatensystems, insbesondere eines Polar-Koordinatensystems, in dem die Position durch einen Wert für den Abstand r in Bezug auf die Richtung z und jeweils ein Wert für zwei Winkel φ, θ angegeben wird, kann je nach Form eines Objekts auf dem sich der anzugebende Punkt befindet, kann ebenfalls vorteilhaft sein. Durch den räumlichen Bezug zweier Punkte kann sichergestellt werden, dass die Position eines Punktes oder die Länge eines Abstandes zwischen zwei Punkten eindeutig im Raum festgelegt wird.

Es kann vorteilhaft sein, wenn alle Datenwerte jedes Datensatzes, der im Rahmen der vorliegenden Erfindung verwendet wird, in einem für alle Datensätze gemeinsamen Koordinatensystem angegeben werden. Bevorzugt kann hierbei das gemeinsame Koordinatensystem ausgewählt werden aus einem Koordinatensystem, das sich auf eine Lage der mindestens einen Pupille des mindestens einen Auges des Nutzers und der hiervon ausgehenden Blick-richtung des mindestens einen Auges des Nutzers durch das mindestens eine Brillenglas bezieht. Vorzugsweise kann hierbei ein eigenes Koordinatensystem für jedes der beiden Augen gewählt werden, das sich auf eine Lage der jeweiligen Pupille des betreffenden Auges des Nutzers und der hiervon ausgehenden Blickrichtung des betreffenden Auges des Nutzers durch das zugehörige Brillenglas bezieht. Insbesondere kann ein Ursprung des hierauf bezogenen Koordinatensystems im Hornhautscheitel liegen kann, wobei vorzugsweise
- eine erste Achse (z-Achse) vorzugsweise parallel zu einer Blickrichtung, insbesondere der Hauptblickrichtung, des Auges des Nutzers angeordnet sein kann, wobei positive Werte bevorzugt in Richtung des Auges angegeben werden können;
- eine zweite Achse (y-Achse) vorzugsweise senkrecht zu der ersten Achse angeordnet sein kann, wobei positive Werte bevorzugt entgegen der Richtung der Gravitation angegeben werden können; und
- eine dritte Achse (x-Achse) vorzugsweise senkrecht sowohl zu der ersten Achse als auch zu der zweiten Achse angeordnet sein kann.

Eine andere Wahl der Achsen und Bezugspunkte ist jedoch denkbar.

Alternativ kann das gemeinsame Koordinatensystem so gewählt werden, dass es sich auf beide Augen des Nutzers und die hiervon ausgehenden Blickrichtungen der beiden Augen des Nutzers durch die beiden Brillengläser bezieht. Hierzu kann insbesondere ein Koordinatensystem ausgewählt werden, das auf Koordinaten basiert, die sich auf die Brillenfassung beziehen, wobei diese Koordinaten vorzugsweise von einem Hersteller der Brillenfassung bereitgestellt werden können. Hierzu kann bevorzugt eine Transformation einer Position der jeweiligen Hornhautscheitel sowie der jeweiligen Blickrichtung, insbesondere der Hauptblickrichtung, jedes der beiden Augen des Nutzers in die Koordinaten, die sich auf die Brillenfassung beziehen, vorgenommen werden kann.

Alternativ kann das gemeinsame Koordinatensystem, das sich auf beide Augen des Nutzers und die hiervon ausgehenden Blickrichtungen der beiden Augen des Nutzers durch die beiden Brillengläser bezieht, derart festgelegt werden, dass, wie unten näher beschrieben, zunächst eine messtechnische Erfassung der Koordinaten der Brillenfassung mittels einer optischen Aufnahmeeinheit, bevorzugt mittels eines Tracers oder mittels eines Scanners, vorzugsweise optischen Scanners, erfolgen. Die Erfassung der Koordinaten der Brillenfassung kann vorzugsweise unter Aufbringen mindestens einer Markierung auf der Brillenfassung erfolgen. Nach einem Aufsetzen der Brillenfassung auf den Kopf des Nutzers oder auf die eingangs beschriebene virtuelle Darstellung des Kopfes des Nutzers in Form eines Avatars oder der virtuellen Repräsentation der Brillenfassung, welche die bevorzugt die mindestens eine Markierung aufweist, auf die virtuelle Darstellung des Kopfes des Nutzers in Form des Avatars kann auch hier bevorzugt eine Transformation einer Position der jeweiligen Hornhautscheitel sowie der jeweiligen Blickrichtung, insbesondere der Hauptblickrichtung, jedes der beiden Augen des Nutzers in diejenigen Koordinaten, die sich auf die Brillenfassung beziehen, vorgenommen werden.

Weitere Alternativen für das gemeinsame Koordinatensystem denkbar.

In einer besonders bevorzugten Ausgestaltung können die Datenwerte einer oder mehrere Datensätze in einem für den betreffenden Datensatz eigenen Koordinatensystem angegeben werden, wobei sich die jeweils eigenen Koordinatensysteme für die zugehörigen Datensätze voneinander unterscheiden können. Diese Ausgestaltung kann daher von besonderem Vorteil sein, da sie eine Anpassung an die in dem jeweiligen Koordinatensystem zu beschreibenden Objekte ermöglichen. Beispielsweise können die Datenwerte des ersten Datensatzes, die unter anderem Punkte auf der Brillenfassung beschreiben, in einem kartesischen Koordinatensystem angeben werden, während die Datenwerte des zweiten Datensatzes, die geometrische Daten zu mindestens einer Fläche des mindestens einen Brillenglases, das in erster Näherung eher eine zylindrische Form aufweist, betreffen, in einem zylindrischen Koordinatensystem beschreiben werden können, während Datenwerte des dritten Datensatzes, die sich auf eine Bearbeitung der Rückfläche des mindestens einen Brillenglases beziehen können, in einem Polar-Koordinatensystem angeben werden können. Weitere Beispiele sind jedoch denkbar.

In dieser Ausgestaltung kann das jeweils eigene Koordinatensystem für einen betreffenden Datensatz jedoch derart gewählt werden, dass alle Datensätze aus dem gemeinsamen Koordinatensystem oder in das gemeinsame Koordinatensystem transformiert werden können sind. Der Begriff "transformieren" beschreibt hierbei eine sowohl das jeweils eigene Koordinatensystem als auch das gemeinsame Koordinatensystem betreffende, als "Koordinatentransformation" bezeichnete Rechenvorschrift, mit der ein beliebiger Datenwert aus einem beliebigen Datensatz aus dem eigenen Koordinatensystem in das gemeinsame Koordinatensystem und/oder aus dem gemeinsamen Koordinatensystem in das eigene Koordinatensystem umgerechnet werden kann. Damit wird ausgedrückt, dass ein eindeutiger räumlicher Bezug zwischen dem eigenen Koordinatensystem eines beliebigen Datensatzes und dem gemeinsamen Koordinatensystem besteht, so dass die Datenwerte aus dem eigenen Koordinatensystem eines ersten beliebigen Datensatzes mittels einer eineindeutigen Koordinatentransformation in die Datenwerte des eigenen Koordinatensystems eines zweiten beliebigen Datensatzes über das gemeinsame Koordinatensystem transformiert werden können. Alternativ können die Datenwerte aus dem eigenen Koordinatensystem des ersten beliebigen Datensatzes in die Datenwerte des eigenen Koordinatensystems des zweiten beliebigen Datensatzes aber auch direkt, d.h. ohne Umweg über das gemeinsame Koordinatensystem, transformiert werden. Insbesondere kann für mindestens einen der Schritte (i) bis (iii) des vorliegenden computerimplementierten Verfahrens jeweils ein eigenes Koordinatensystem angegeben werden, wobei alle Datenwerte in dem jeweils eigenen Koordinatensystem aus dem gemeinsamen Koordinatensystem und in das gemeinsame Koordinatensystem durch mindestens eine ausschließlich mathematische Operation transformiert werden.

Für das hier vorgeschlagene computerimplementierte Verfahren kann es insbesondere genügen, wenn
- ein beliebiger Datenwert des ersten Datensatzes, der mindestens einen Zentrierwert und das dreidimensionale Modell der Brillenfassung umfasst, aus dem eigenen Koordinatensystem in das gemeinsame Koordinatensystem;
- ein beliebiger Datenwert aus dem gemeinsamen Koordinatensystem in das eigene Koordinatensystem des zweiten Datensatzes, der geometrische Datenwerte mindestens einer Fläche des mindestens einen Brillenglases umfasst;
- ein beliebiger Datenwert des zweiten Datensatzes, der geometrische Datenwerte mindestens einer Fläche des mindestens einen Brillenglases umfasst, aus dem eigenen Koordinatensystem in das gemeinsame Koordinatensystem, und
- ein beliebiger Datenwert aus dem gemeinsamen Koordinatensystem in das eigene Koordinatensystem des dritten Datensatzes, der insbesondere Datenwerte zur Bearbeitung der Rückfläche des mindestens einen Brillenglases, zur Bearbeitung des lateralen Randes des mindestens einen Brillenglases und zu jeweiligen Positionierung des mindestens einen Brillenglases umfasst,
mittels einer jeweiligen Koordinatentransformation transformiert werden kann.

Auf diese Weise können vorzugsweise alle Datenwerte, die bei der Herstellung der Brille verwendet werden, unter Beinhaltung der räumlichen Lage davon betroffener Punkte oder Abstände ineinander transformiert werden. Damit wird eine form- und winkelgerechte Erstellung der Brille, die sowohl das Herstellen des mindestens einen Brillenglases aus dem mindestens einen Brillenglasrohling und das Einbringen des mindestens einen Brillenglases in die Brillenfassung unter Verwendung des mindestens einen Zentrierwerts, des dreidimensionalen Modell der Brillenfassung und der mindestens eine geometrische Wert mindestens einer Fläche des mindestens einen Brillenglases umfasst, möglich.

Gemäß Schritt (i) des vorliegenden computerimplementierten Verfahrens erfolgt ein Bereitstellen des mindestens einen, auf einem Speichermedium gespeicherten ersten Datensatzes, wobei der erste Datensatz
- mindestens einen Zentrierwert und
- ein dreidimensionales Modell der Brillenfassung
umfasst.

Hierbei kann die Bestimmung des mindestens einen Zentrierwerts vorzugsweise durch Erstellen einer Zentrieraufnahme mit von dem Nutzer aufgesetzter Brillenfassung unter habitueller Kopf- und Körperhaltung und damit festgelegter Blickrichtung des Nutzers durch das Brillenglas erfolgen. Hierbei kann die von dem Nutzer aufgesetzte Brillenfassung insbesondere eine so genannte "Stützscheibe" oder "Dummyglas" umfassen, so dass eine erster, unten näher definierter Hornhautscheitelabstand zwischen dem Hornhautscheitel des mindestens einen Auges und der mindestens einen Stützscheibe bestimmt werden kann. Der Begriff des "Zentrierwerts" bezeichnet hierbei einen geometrischen Wert, der in Zusammenhang mit dem Nutzer und/oder der Brillenfassung steht und der es daher ermöglicht, das mindestens eine Brillenglas möglichst so in die an den Nutzer, insbesondere Kopfform und Auge des Nutzers, angepasste Brillenfassung einzubringen, dass der mindestens eine Refraktionsfehler mindestens eines Auges des Nutzers möglichst gut durch das mindestens eine Brillenglas korrigiert wird.

Der mindestens eine Zentrierwert kann hierbei vorzugsweise mindestens einen, bevorzugt zwei oder drei, der folgende Datenwerte umfassen:
- mindestens einen Abstand eines Hornhautscheitels mindestens eines Auges des Nutzers zu einem Durchblickpunkt mindestens einer Blickrichtung durch mindestens eine Fläche des Brillenglases;
- mindestens einen Abstand des Durchblickpunkts zu einer Geraden durch mindestens einen untersten Punkt einer Fassungsrandkurve der Brillenfassung oder einer Randkurve des mindestens einen Brillenglases;
- mindestens einen horizontalen Abstand zwischen jeweils einer identischen Position auf jeder der beiden Brillengläser.

Weitere Datenwerte, die als Zentrierwert dienen, sind allerdings denkbar. Hierzu kann insbesondere auf weitere Datenwerte, die in der Norm festgelegt werden, zurückgegriffen werden. Die darin verwendeten mindestens einen ersten Winkel, um den eine Fassungsebene der Brillenfassung geneigt ist, oder mindestens einen zweiten Winkel zwischen einer Scheibenebene des mindestens einen Brillenglases und der Fassungsebene sind jedoch weniger für diesen Zweck geeignet, da sie lediglich auf Näherungen basieren, die erfindungsgemäß vermieden werden sollen.

Hierbei bezeichnet der Begriff des "Durchblickpunkts" einen Schnittpunkt einer Blickrichtung des Nutzers mit der augenseitigen Rückfläche des zugehörigen Brillenglases. Für den Fall, dass auf Seiten des Nutzers mindestens zwei Blickrichtungen existieren, kann folglich ein Durchblickpunkt für jede der mindestens zwei Blickrichtungen angegeben werden. Als weiterer Zentrierwert kann für das mindestens eine Auge des Nutzers mindestens ein Abstand eines Durchblickpunkts zu einer Geraden durch mindestens einen untersten Punkt einer Fassungsrandkurve der Brillenfassung oder einer Randkurve des Brillenglases angegeben werden, wobei dieser Abstand auch als "Einschleifhöhe" bezeichnet werden kann. Auch hier kann vorzugsweise kann eine rechtsseitige Einschleifhöhe oder eine linksseitige Einschleifhöhe angegeben werden, wobei sich die "rechtsseitige Einschleifhöhe" auf das rechte Auge des Nutzers und die "linksseitige Einschleifhöhe" auf das linke Auge des Nutzers, jeweils von dem Nutzer aus betrachtet, bezieht.

Weiterhin bezeichnet der Begriff des "Hornhautscheitels" die *Cornea Apex* eines Auges des Nutzers, wobei ein in Anlehnung an die Norm, 3.2.40 festgelegter "Hornhautscheitelabstand" oder "HSA" einem horizontalen Abstand des Hornhautscheitels des mindestens einen Auge des Nutzers zu einem zugehörigen Durchblickpunkt bei habitueller Kopf- und Körperhaltung und damit festgelegter Blickrichtung des Nutzers durch ein Brillenglas oder eine Stützscheibe als einer der Zentrierwerte verwendet werden kann.

Weiterhin kann der horizontale Abstand zwischen jeweils einer identischen Position auf jeder der beiden Brillengläser, insbesondere zwischen dem Durchblickpunkt auf dem linken Brillenglas und dem Durchblickpunkt auf dem rechten Brillenglas, einen horizontalen Abstand zwischen den Zentrierpunkten der beiden Brillengläser in einer Brille festlegen. Der Zentrierpunktabstand kann hierbei als monokularer Wert, gemessen von einer Mittellinie einer Brücke der Brillenfassung angegeben werden. Insbesondere kann sich dadurch der Zentrierpunktabstand direkt mit der Mittellinie der Brücke der Brillenfassung verbinden lassen.

Das Erfassen der angegebenen Zentrierwerte, insbesondere des mindestens einen Abstands des Hornhautscheitels, des mindestens einen Abstand des Durchblickpunkts zu der Geraden durch den mindestens einen untersten Punkt der Fassungsrandkurve oder der Randkurve oder des mindestens einen horizontalen Abstands zwischen den jeweils identischen Positionen auf jeder der beiden Brillengläser, kann vorzugsweise mit einer Genauigkeit von besser als ± 1 mm erfolgen.

Wie oben bereits erwähnt, umfasst der gemäß Schritt (i) bereitgestellte mindestens eine erste Datensatz weiterhin ein dreidimensionales Modell der Brillenfassung. Der Begriff des "dreidimensionalen Modells" bezeichnet hierbei eine Darstellung der Brillenfassung in Form einer Vielzahl an Datenpunkten, wobei jeder Datenpunkt eine Position auf der Oberfläche der Brillenfassung in dem dreidimensionalen Raum beschreibt. Insbesondere umfasst das dreidimensionale Modell der Brillenfassung eine Vielzahl an Datenpunkten, welche die Fassungsrandkurve der Brillenfassung, insbesondere die Innenkontur der Brillenfassung, oder die Randkurve einer Halbrandbrille oder einer rahmenlosen Brille betreffen. In einer bevorzugten Ausgestaltung kann die Vielzahl der Datenpunkte aus Konstruktionsdaten der Brillenfassung, insoweit diese als räumliches Modell verfügbar ist, ausgewählt werden. Hierbei können die Konstruktionsdaten der Brillenfassung insbesondere direkt aus Modelldaten eines Herstellers der Brillenfassung, vorzugsweise aus CAD-Daten, bereitgestellt werden. Alternativ oder zusätzlich kann die Vielzahl der Datenpunkte, insbesondere vor der Anpassung der Brillengläser an die von dem Nutzer ausgewählte Brillenfassung, in einem optischen Messlabor messtechnisch mittels einer optischen Aufnahmeeinheit erfasst werden, bevorzugt mittels eines Tracers abgetastet oder mittels eines Scanners, vorzugsweise optischen Scanners, aufgenommen werden. Als optischer Scanner kann hierfür vorzugsweise die in der internationalen Patentanmeldung PCT/EP2019/086338, angemeldet am 19.12.2019, offenbarte Vorrichtung zur optischen Vermessung einer Innenkontur einer Brillenfassung verwendet werden.

Gemäß Schritt (ii) des vorliegenden computerimplementierten Verfahrens erfolgt ein Erstellen mindestens eines auf einem Speichermedium gespeicherten zweiten Datensatzes unter Verwendung des mindestens einen ersten Datensatzes, wobei der zweite Datensatz mindestens einen geometrischen Wert mindestens einer Fläche des mindestens einen Brillenglases umfasst. Wie oben bereits erwähnt, kann eine als Brillenglas eingesetzte optische Linse insbesondere eine augenabgewandte Vorderfläche und eine augenseitige Rückfläche aufweisen. Der Begriff des "geometrischen Wertes" betrifft einen Datenwert, der dazu eingerichtete ist, die Form der mindestens einer Fläche, vorzugsweise die Vorderfläche und Rückfläche, des mindestens einen Brillenglases zu beschreiben. Bei der Erstellung des zweiten Datensatzes kann aus dem ersten Datensatz insbesondere der Hornhautscheitelabstand berücksichtigt werden, da üblicherweise die Angabe der Wirkung des Brillenglases auf einen bestimmten Hornhautscheitelabstand bezogen wird, so dass sich bei dessen Veränderung auch die Angabe der Korrektionswirkung des Brillenglases ändert.

Zur Erstellung des mindestens einen zweiten Datensatzes können bevorzugt die folgenden Schritte durchgeführt werden, die insbesondere zu einer Optimierung des mindestens einen geometrischen Wertes der mindestens einen Fläche des mindestens einen Brillenglases führen und die daher auch als "Lens Design" bezeichnet werden:
A. In einem ersten Schritt kann eine Festlegung der augenabgewandten sphärischen Vorderfläche nach optischen und/oder ästhetischen Gesichtspunkten erfolgen. Hierbei kann ein Radius der Vorderfläche, wie in EP 0 857 993 B2 offenbart, bevorzugt aus Halbfabrikaten mit sphärischen oder asphärisch rotationssymmetrischen konvexen Vorderflächen mit wenigen unterschiedlichen Radien ausgewählt werden. Bereits bei der Auswahl der Vorderfläche kann es besonders vorteilhaft sein, eine Anpassung der Vorderfläche an die Fassungsform der Fassungsrandkurve der Brillenfassung oder der Randkurve der Halbrandbrille oder rahmenlosen Brille sowie den mindestens einen Zentrierwert zu berücksichtigen.
B. In einem weiteren Schritt kann eine Festlegung einer Position der Vorderfläche vor dem Auge unter Berücksichtigung der Fassungsform und des dreidimensionalen Verlaufs der Fassungsrandkurve oder der Randkurve erfolgen. Hierbei kann bevorzugt das gemeinsame Koordinatensystem, insbesondere das Koordinatensystem des Auges, als Koordinatensystem für die Datenwerte des zweiten Datensatzes verwendet werden, wodurch gleichzeitig auch die Koordinatentransformation der Datenwerte, welche der Vorderfläche des Brillenglases zugeordnet sind, in das Koordinatensystem des Auges festgelegt wird.
C. In einem weiteren Schritt kann eine Ermittlung der Rückfläche des Brillenglases insbesondere unter Berücksichtigung der folgenden Punkte erfolgen:
   - An mindestens einem vorher festgelegten Bezugspunkt auf der Vorderfläche des Brillenglases soll die gewünschte Korrektionswirkung des Brillenglases in Bezug auf den mindestens einen Refraktionsfehler des Auges des Nutzers erreichbar sein.
   - Eine Verteilung von optischen Bildfehlern soll hierbei einer vorher festgelegten Zielverteilung möglichst gut entsprechen. Um dies zu erreichen, kann bevorzugt eine Optimierung durchgeführt werden, welche die Rückfläche, ausgehend von einer anfangs festgelegten Startfläche, iterativ so verändert, dass ein Unterschied zur Zielverteilung unterhalb mindestens eines vorher festgelegten Grenzwertes bleibt oder eine weitere Iteration keine Verbesserung mehr bringt. Hierbei kann die Wirkung des optimierten Brillenglases für den Nutzer an einer Vielzahl von Durchblickpunkten auf dem Brillenglas in Bezug auf die Scheitelkugel berechnet und mit dem dort vorgegebenen Zielwert verglichen. Hierbei kann bevorzugt eine Drehung des Auges des Nutzers um einen vorher festgelegten Augendrehpunkt unter Berücksichtigung der so genannten "Listing`schen Regel" simuliert werden. Die Listing`sche Regel besagt, dass alle Augenbewegungen, die aus der Primärstellung des Auges heraus in eine Sekundärposition oder in eine Tertiärposition des Auges münden, als Duktionen um Achsen, die in einer Ebene liegen, denkbar sind.
   - Während der Iteration kann insbesondere eine Änderung einer Dicke des Brillenglases, die durch einen Abstand zwischen der Vorderfläche und der Rückfläche des Brillenglases definiert ist, erfolgen. Gründe dafür können Vorgaben für die Dicke und/oder Stabilitätsbedingungen für das Brillenglas an dünnsten Stellen sein. Insbesondere können auch hier die Fassungsrandkurve der Brillenfassung oder die Randkurve der Halbrandbrille oder rahmenlosen Brille berücksichtigt werden, insbesondere da sich die dünnste Stelle des Brillenglases nahe am Rand des Brillenglases befinden kann. Damit kann sich während der Iteration insbesondere der Hornhautscheitelabstand ändern. Es kann daher vorteilhaft sein, die Korrektionswirkung des Brillenglases in dem vorher festgelegten Bezugspunkt in jedem Iterationsschritt zu berechnen und derart auf den ursprünglich als Zentrierwert festgelegten Hornhautscheitelabstand umzurechnen, dass die so berechnete die Korrektionswirkung des Brillenglases mit dem gewünschten Korrektionswert für das Brillenglas übereinstimmt.

Nach erfolgter Optimierung liegen die Datenwerte der Rückfläche des Brillenglases üblicherweise in einem eigenen Koordinatensystem vor. Die Transformation dieser Datenwerte in das gemeinsame Koordinatensystem sind jedoch bekannt.

Wie bereits oben erwähnt, kann während Schritt (i) die Bestimmung des mindestens einen Zentrierwerts bevorzugt durch Erstellen einer Zentrieraufnahme mit von dem Nutzer aufgesetzter Brillenfassung, die mindestens eine Stützscheibe oder ein Dummyglas umfasst, erfolgen, so dass hier ein erster Hornhautscheitelabstand bestimmt werden kann. Demgegenüber bezieht sich die gemäß Schritt (ii) berechnete optische Wirkung des mindestens einen Brillenglases auf eine reale und optimierte Position und Orientierung der Vorderfläche des Brillenglases zur Brillenfassung unter Berücksichtigung von Facettenausbildung und Randstabilität des mindestens einen Brillenglases, so dass hier, wie in den Ausführungsbeispielen näher erläutert, ein zweiter Hornhautscheitelabstand bestimmt werden kann.

In einer bevorzugten Ausgestaltung der vorliegenden Erfindung kann mindestens eine zweite Datensatz mindestens einen weiteren Datenwert umfassen, der eine Glasauswahl für das mindestens eine Brillenglas angibt. Wie eingangs erwähnt, betrifft die "Glasauswahl" eine Eigenschaften des mindesten seinen Brillenglases, insbesondere einen Glastyp, einen Brechungsindex, eine Tönung und mindestens eine optionale Beschichtung eines Brillenglases.

Ist die Berechnung des Brillenglases gemäß Schritt (ii) derart abgeschlossen, dass der mindestens eine zweite Datensatz, der mindestens einen geometrischen Wert mindestens einer Fläche des mindestens einen Brillenglases umfasst, vorliegt, so sind folgende Eigenschaften des mindestens einen Auges, der Brillenfassung und des mindestens einen Brillenglases nicht nur bekannt, sondern stehen in eineindeutiger Beziehung zueinander:
- Positionen der Vorderfläche und der Rückfläche des mindestens einen Brillenglases im gemeinsamen Koordinatensystem, insbesondere dem Koordinatensystem des Auges, oder in Bezug auf das gemeinsame Koordinatensystem;
- geometrische Werte der der Vorderfläche und der Rückfläche des mindestens einen Brillenglases im eignen Koordinatensystem und zugehörige Koordinatentransformationen in das gemeinsame Koordinatensystem, insbesondere das Koordinatensystem des Auges;

- die Fassungsrandkurve der Brillenfassung oder die Randkurve der Halbrandbrille oder rahmenlosen Brille im gemeinsamen Koordinatensystem, insbesondere dem Koordinatensystem des Auges, oder in Bezug auf das gemeinsame Koordinatensystem;
- Parameter für die Koordinatentransformationen, insbesondere zwischen dem gemeinsamen Koordinatensystem, insbesondere dem Koordinatensystem des Auges, zu den jeweils eigenen Koordinatensystemen der Vorderfläche des mindestens einen Brillenglases, der Rückfläche des mindestens einen Brillenglases, und der Fassungsrandkurve der Brillenfassung oder der Randkurve der Halbrandbrille oder rahmenlosen Brille. Damit liegen auch alle weitere denkbare Koordinatentransformationen fest, z.B. aus den oder jeweils eigenen Koordinatensystemen oder in die jeweils eigenen Koordinatensystemen der Vorderfläche des mindestens einen Brillenglases und der Rückfläche des mindestens einen Brillenglases.

Mit anderen Worten, nach Abschluss des Schrittes (ii) des vorliegenden computerimplementierten Verfahrens liegt, auf einem Speichermedium gespeichert, ein so genannter "digitaler Zwilling" als virtuelle Repräsentation der Brille vor, der aus den Datenwerten des mindestens einen ersten Datensatzes und des mindestens einen zweiten Datensatzes gebildet ist, aus welchem nunmehr gemäß Schritt (iii) des vorliegenden computerimplementierten Verfahrens mindestens ein auf einem Speichermedium gespeicherter dritter Datensatz erstellt wird, der zu einer Herstellung des mindestens einen Brillenglases aus mindestens einem Brillenglasrohling und zum Einschleifen und/oder Einbringen des mindestens einen Brillenglases in die Brillenfassung unter Verwendung des mindestens einen dritten Datensatzes eingerichtet ist. Der Begriff der "virtuellen Repräsentation" bezeichnet hierbei eine Speicherung eines Gegenstandes, insbesondere einer Brillenfassung oder einer Brille, in einem virtuellen Raum. Die virtuelle Repräsentation kann hierbei eine Darstellung auf einer optischen Anzeigeeinrichtung, insbesondere einem mit einem Computer verbundenen Monitor oder einem Bildschirm, z.B. eines berührungsempfindlichen Bildschirms (Touchscreen), eines mobilen Kommunikationsgerätes, insbesondere eines Smartphones oder Tablets, umfassen. Der mindestens eine dritte Datensatz wird hierbei auch als "Fertigungsdatensatz" bezeichnet, da jeder Datenwert des mindestens einen dritten Datensatzes vorzugsweise mindestens eine Information in Bezug auf die Herstellung des mindestens einen Brillenglases oder zum Einschleifen und/oder Einbringen des mindestens einen Brillenglases in die Brillenfassung umfasst, wobei die Information in einem Verfahren zur Herstellung mindestens einer Brille eingesetzt werden kann.

In einem weiteren Aspekt betrifft die vorliegende Erfindung ein Verfahren zur Herstellung einer Brille, das folgende Verfahrensschritte umfasst:
(I) Erzeugung von Daten zur Herstellung eines an eine Brillenfassung einer Brille angepassten mindestens einen Brillenglases gemäß einem hierin beschriebenen computerimplementierten Verfahren zur Erzeugung von Daten zur Herstellung eines an eine Brillenfassung einer Brille angepassten mindestens einen Brillenglases;
(II) Herstellen des mindestens einen Brillenglases aus mindestens einem Brillenglasrohling und Einschleifen und/oder Einbringen des mindestens einen Brillenglases in die Brillenfassung unter Verwendung des dritten Datensatzes der gemäß Schritt (I) erzeugten Daten.

Das Herstellen des mindestens einen Brillenglases aus dem mindestens einen Brillenglasrohling gemäß Schritt (II) des vorliegenden Verfahrens zur Herstellung einer Brille kann vorzugsweise mindestens einen, bevorzugt zwei oder drei der folgenden Schritte a) bis c) umfassen, wobei weitere hierin nicht angegebene Schritte durchgeführt werden können, wobei die Schritte jeweils unter Verwendung des mindestens einen dritten Datensatzes ausgeführt werden:
a) Einbringen eines Brillenglasrohlings in eine Halteeinrichtung zur Fixierung des Brillenglasrohlings;
b) Bearbeiten eines lateralen Randes des Brillenglasrohlings, wodurch eine Randform des Brillenglases festgelegt wird;
c) Bearbeiten zumindest einer Fläche des Brillenglasrohlings, wodurch eine Korrekturwirkung des Brillenglases erhalten wird.

In einer bevorzugten Ausgestaltung kann Schritt b) vor Schritt c) durchgeführt werden. In dieser Ausgestaltung kann der Brillenglasrohling nach Schritt b) in der Halteeinrichtung zur Fixierung des Brillenglasrohlings verbleiben oder vor einer Durchführung von Schritt c) in eine weitere Halteeinrichtung zur erneuten Fixierung des Brillenglasrohlings eingebracht werden. In einer alternativen Ausgestaltung kann Schritt c) vorzugsweise vor Schritt b) durchgeführt werden. In dieser Ausgestaltung kann der Brillenglasrohling nach Schritt c) in der Halteeinrichtung zur Fixierung des Brillenglasrohlings verbleiben oder vor der Durchführung von Schritt b) in eine weitere Halteeinrichtung zur erneuten Fixierung des Brillenglasrohlings eingebracht werden.

Vorzugsweise kann, insbesondere vor Schritt b), mindestens eine Markierung auf die Rückfläche des Brillenglases unter Verwendung des dritten Datensatzes aufgebracht werden, so dass die Bearbeitung des lateralen Randes des Brillenglases gemäß Schritt b) unter Verwendung der mindestens einen Markierung auf der Rückfläche des Brillenglases derart erfolgen kann, dass so eine gewünschte Randform des Brillenglases erhalten wird. Die mindestens eine Markierung auf der Rückfläche des Brillenglases kann hierbei bevorzugt in Form von Referenzmarken, insbesondere in Form von mindestens drei, bevorzugt genau drei, Referenzpunkten, die auf einer Sphäre liegen, vorliegen.

Zusätzlich kann auf der Vorderfläche des Brillenglases mindestens eine weitere Markierung aufgebracht werden. Zur Aufbringung der mindestens einen weiteren Markierung auf der Vorderfläche des Brillenglases kann vorzugsweise ein Laser eingesetzt werden, der die gewünschte weitere Markierung auf dem gemäß Schritt a) bereits fixierten Brillenglas vornehmen kann. Andere Arten der Aufbringung der mindestens einen weiteren Markierung sind jedoch denkbar.

Gemäß Schritt a) kann hierbei ein Einbringen des Brillenglasrohlings in eine Halteeinrichtung zur Fixierung des Brillenglasrohlings erfolgen. Vorzugsweise kann hierzu ein so genanntes "Blocken" des Brillenglasrohlings durchgeführt werden, das eine Bearbeitung des Brillenglasrohlings gemäß Schritt b) oder Schritt c) in mindestens einer dafür eingerichteten Bearbeitungsvorrichtung, die zur Erstellen des lateralen Randes des Brillenglases und/oder der gewünschte Rückfläche des Brillenglases eingerichtet ist, ermöglicht. Das Bearbeiten des Brillenglasrohlings kann vorzugsweise einen Materialabtrag an mindestens einer Fläche des Brillenglasrohlings, insbesondere durch Fräsen, Drehen, Schleifen, Feinschleifen und/oder Polieren, umfassen. Hierbei kann es erforderlich sein, beide Flächen des Brillenglasrohlings einer Bearbeitung zu unterziehen, wobei der Brillenglasrohling nach Abschluss der Bearbeitung einer ersten Fläche mittels einer Wendeeinrichtung gewendet werden kann. Vorzugsweise können jedoch Halbfabrikate eingesetzt werden, die über eine bereits fertiggestellte Vorderfläche verfügen, gegebenenfalls versehen mit mindestens einer hierauf ebenfalls bereits aufgebrachten Beschichtung, so dass nur noch die auch als "Rezeptfläche" bezeichnete Rückfläche des Brillenglasrohlings einer Bearbeitung unterzogen wird. Vorzugsweise können vor der Bearbeitung diejenigen Glasflächen des Brillenglasrohlings, die nicht bearbeitet werden, mit einer Schutzeinrichtung, insbesondere einer Folie oder einer Lackierung, versehen werden.

Insbesondere kann der Brillenglasrohling bei dem Blocken mit seiner Vorderfläche an einem Blockstück befestigt werden, wobei der fest mit dem Blockstück verbundene Brillenglasrohling anschließend in die mindestens eine Bearbeitungsvorrichtung eingeführt werden kann. Zur Herstellung einer Verbindung zwischen dem Blockstück und dem Brillenglasrohling kann bevorzugt eine, einen niedrigen Schmelzpunkt aufweisende, Metalllegierung als Haftmittel verwendet werden, nach deren Aushärtung der Brillenglasrohling fest mit dem Blockstück verbunden ist, so dass sie der gemeinsamen Bearbeitung unterzogen werden können. In einer alternativen Ausgestaltung kann hierfür ein UV-härtender Kleber eingesetzt werden. Weitere Arten der Fixierung des Brillenglasrohlings sind denkbar.

Die Bearbeitung des lateralen Randes des Brillenglases gemäß Schritt b) zur Festlegung der Randform des Brillenglases, die auch als "Formranden" bezeichnet wird, kann vorzugsweise durch Materialabtrag am Rand des Brillenglases, insbesondere durch Fräsen, Drehen, Schleifen, Feinschleifen und/oder Polieren, erfolgen. Hierbei kann eine Festlegung des Materialabtrags durch eine Übertragung der Datenwerte aus dem mindestens einen dritten Datensatz, der, wie oben erwähnt, aus den Datenwerten des mindestens einen ersten Datensatzes und des mindestens einen zweiten Datensatzes gebildet ist und daher sowohl die Datenwerte in Bezug auf das mindestens eine Brillenglas als auch die Brillenfassung aufweist, mittels mindestens einer Schnittstelle an die mindestens eine Bearbeitungsvorrichtung erfolgen. Insbesondere können hier eine VCA Maschinenschnittstelle oder eine OPC-UA Maschinenschnittstelle, z.B. als Step-File zur Transformation in CNC Koordinaten in Bezug auf eine Spanndom-Vorderfläche und die Referenzmarken auf der Rückseite des Brillenglases, eingesetzt werden.

Unabhängig von den hierbei tatsächlich eingesetzten Maschinenschnittstellen kann auf diese Weise auch hier sichergestellt werden, dass das Fixieren des Brillenglases in der Halteeinrichtung und die Bearbeitung des Randes des Brillenglases in der mindestens einen Bearbeitungsvorrichtung derart erfolgt, dass die Randform des Brillenglases auch tatsächlich den Datenwerten des ersten Datensatzes entsprechen. Grund hierfür ist, dass jeweils eine genau festgelegte Koordinatentransformation aus dem gemeinsamen Koordinatensystem in ein eigenes Koordinatensystem der Halteeinrichtung und/oder der mindestens einen Bearbeitungsvorrichtung erfolgen kann, so dass lediglich eine Umrechnung der Koordinaten aus einem ersten Koordinatensystem in ein zweites Koordinatensystem stattfindet, wobei die tatsächliche Lage der hierdurch betroffenen Punkte im Raum unverändert bleibt.

Um gemäß Schritt c) die Bearbeitung des Brillenglasrohlings vorzunehmen, um auf diese Weise die gewünschte Rückfläche des Brillenglases gemäß den Datenwerten des zweiten Datensatzes zu erhalten, kann eine Koordinatentransformation aus dem gemeinsamen Koordinatensystem in ein eigenes Koordinatensystem der Halteeinrichtung und/oder der mindestens einen Bearbeitungsvorrichtung erfolgen. Hierbei lassen sich vorzugsweise bildgebende Verfahren einsetzen, um mögliche Fehler bei der Einbringung des Brillenglasrohlings in die Halteeinrichtung und/oder die mindestens einen Bearbeitungsvorrichtung zu vermeiden. Hierbei kann bevorzugt eine parallaxe Kompensation vorgenommen werden, insbesondere um aufgrund eines möglichen Kippens oder einem möglichen Versatz beim Blocken des Brillenglasrohlings auftretende Parallaxenfehler zu kompensieren. Zur Bearbeitung des Brillenglasrohlings kann die mindestens eine Bearbeitungsvorrichtung bevorzugt auf eine CNC Koordinaten-Punktewolke zurückgreifen, aus denen Bearbeitungssplines in einem eigenen Koordinatensystem der mindestens einen Bearbeitungsvorrichtung ermittelt werden. Auf diese Weise kann sichergestellt werden, dass das Fixieren des Brillenglasrohlings in der Halteeinrichtung und die Bearbeitung des Brillenglasrohlings in der mindestens einen Bearbeitungsvorrichtung derart erfolgen, dass die Vorderfläche und die Rückfläche des Brillenglases auch tatsächlich den Datenwerten des zweiten Datensatzes entsprechen. Alternativ oder zusätzlich kann eine Beschreibung der Form der Rezeptfläche als mathematische Formel direkt in dem Koordinatensystem der mindestens einen Bearbeitungsmaschine erfolgen. Damit kann insbesondere vermieden werden, dass zwischen einer optischen Rechnung und einer Approximation der Flächenpunkte durch eine die mindestens eine Bearbeitungsmaschine steuernde Bearbeitungssoftware Fehler auftreten.

Weiterhin kann gemäß Schritt (II) nunmehr das Einbringen des mindestens einen Brillenglases in die Brillenfassung erfolgen, wodurch nunmehr die fertiggestellte Brille vorliegt. Aufgrund des Vorgehens im hierin beschriebenen computerimplementierten Verfahren, die Datenwerte jedes Datensatzes durchgehend in Bezug auf ein jeweiliges Koordinatensystem anzugeben, wobei alle Datenwerte jedes Datensatzes in einem für alle Datensätze gemeinsamen Koordinatensystem angegeben werden oder aus dem gemeinsamen Koordinatensystem oder in das gemeinsame Koordinatensystem transformiert werden, können sich etwaig auftretende Abweichungen, Fehler und/oder Toleranzen nicht länger addieren. Damit entspricht die fertiggestellte Brille den Anforderungen des Nutzers, wobei die Brillenfassung passgenau auf den Kopf des Nutzers angepasst ist und die Brillengläser den mindestens einen Refraktionsfehler des Nutzers zutreffend korrigieren, ohne dass bei dem Nutzer eine Unverträglichkeit auftreten kann. In Folge trägt der Nutzer die angefertigte Brille sehr gern und wird insbesondere dem Augenoptiker gegenüber keine Reklamationen in Bezug auf die angefertigte Brille vorbringen.

In einem weiteren Aspekt betrifft die vorliegende Erfindung ein Computerprogramm, das von einem Computer ausführbare Anweisungen umfasst, wobei die Anweisungen bei Ausführung des Programms durch einen Computer diesen veranlassen, mindestens einen der Schritte, vorzugsweise alle Schritte, des hierin beschriebenen computerimplementierten Verfahrens zur Erzeugung von Daten zur Herstellung eines an eine Brillenfassung einer Brille angepassten mindestens einen Brillenglases auszuführen.

In einem weiteren Aspekt betrifft die vorliegende Erfindung ein computerlesbares Speichermedium, auf dem mindestens ein Datensatz, welcher in einem hierin beschriebenen computerimplementierten Verfahren zur Erzeugung von Daten zur Herstellung eines an eine Brillenfassung einer Brille angepassten mindestens einen Brillenglases verwendet wird, gespeichert ist.

Für weitere Einzelheiten in Bezug auf das Computerprogramm und/oder das computerlesbare Speichermedium wird auf die übrige Beschreibung verwiesen.

In einem weiteren Aspekt betrifft die vorliegende Erfindung ein System zur Herstellung eines an eine Brillenfassung einer Brille angepassten mindestens einen Brillenglases. Der Begriff des "Systems" bezeichnet hierbei eine Vorrichtung, die mehrteilig ausgestaltet ist, wobei unterschiedliche Teile des Systems zumindest teilweise zusammenwirken. Das vorliegende System umfasst:
- mindestens eine erste Vorrichtung, die zur Bestimmung mindestens eines Zentrierwerts eingerichtet ist;
- mindestens eine zweite Vorrichtung, die zur Bestimmung eines dreidimensionalen Modells der Brillenfassung eingerichtet ist;
- mindestens eine dritte Vorrichtung, die zur Bestimmung mindestens eines geometrischen Wertes mindestens einer Fläche des mindestens einen Brillenglases eingerichtet ist;
- mindestens eine erste Auswerteeinheit, umfassend:
   o mindestens eine erste Eingangsschnittstelle, die zum Empfang des mindestens eines Zentrierwerts und des dreidimensionalen Modells der Brillenfassung eingerichtet ist;
   o mindestens eine erste Berechnungseinheit, die zum Ermitteln mindestens eines ersten Datensatzes eingerichtet ist, wobei der erste Datensatz zumindest folgende Datenwerte umfasst: mindestens einen Zentrierwert; ein dreidimensionales Modell der Brillenfassung;
   o mindestens eine erste Ausgangsschnittstelle, die zum Bereitstellen des mindestens einen ersten Datensatzes eingerichtet ist;
- mindestens eine zweite Auswerteeinheit, umfassend:
   o mindestens eine zweite Schnittstelle, die zum Empfang des mindestens einen ersten Datensatzes und des mindestens eines geometrischen Werts der mindestens einen Fläche des mindestens einen Brillenglases eingerichtet ist;
   o mindestens eine zweite Berechnungseinheit, die zum Ermitteln mindestens eines zweiten Datensatzes unter Verwendung des mindestens einen ersten Datensatzes eingerichtet ist, wobei der zweite Datensatz zumindest folgende Datenwerte umfasst: mindestens einen geometrischen Wert mindestens einer Fläche des mindestens einen Brillenglases;
   o mindestens eine zweite Ausgangsschnittstelle, die zum Bereitstellen des mindestens einen zweiten Datensatzes eingerichtet ist;
- mindestens eine dritte Auswerteeinheit, umfassend:
   o mindestens eine dritte Eingangsschnittstelle, die zum Empfang des mindestens eines ersten Datensatzes und des mindestens einen zweiten Datensatzes eingerichtet ist;
   o mindestens eine dritte Berechnungseinheit, die zum Ermitteln mindestens eines dritten Datensatzes zum Herstellen des mindestens einen Brillenglases aus mindestens einem Brillenglasrohling und zum Einschleifen und/oder Einbringen des mindestens einen Brillenglases in die Brillenfassung unter Verwendung des mindestens einen ersten Datensatzes und des mindestens einen zweiten Datensatzes eingerichtet ist;
   o mindestens eine dritte Ausgangsschnittstelle, die zum Bereitstellen des mindestens einen dritten Datensatzes eingerichtet ist;
- mindestens eine Steuerungseinheit, umfassend:
   o mindestens eine vierte Schnittstelle, die zum Empfang des mindestens einen dritten Datensatzes eingerichtet ist;
   o mindestens eine Herstellungseinheit, die zum Herstellen des mindestens einen Brillenglases aus dem mindestens einem Brillenglasrohling und zum Einschleifen und/oder Einbringen des mindestens einen Brillenglases in die Brillenfassung unter Verwendung des mindestens einen dritten Datensatzes eingerichtet ist,
wobei die Datenwerte jedes Datensatzes dadurch einen räumlichen Bezug zueinander aufweisen, dass die Datenwerte jedes Datensatzes durchgehend in Bezug auf ein jeweiliges Koordinatensystem angegeben werden, wobei alle Datenwerte jedes Datensatzes in einem für alle Datensätze gemeinsamen Koordinatensystem angegeben werden .

Erfindungsgemäß wird der räumliche Bezug dadurch erreicht, dass jede Berechnungseinheit dazu eingerichtet ist, die Datenwerte jedes Datensatzes in Bezug auf ein jeweiliges Koordinatensystem anzugeben und alle Datenwerte jedes Datensatzes in einem für alle Datensätze gemeinsamen Koordinatensystem anzugeben. Hierzu kann jede Berechnungseinheit insbesondere dazu eingerichtet sein, ein jeweils eigenes Koordinatensystem zu verwenden und alle Datenwerte in dem jeweils eigenen Koordinatensystem aus dem gemeinsamen Koordinatensystem und in das gemeinsame Koordinatensystem durch mindestens eine ausschließlich mathematische Operation zu transformieren.

In einer bevorzugten Ausgestaltung kann die mindestens eine erste Auswerteeinheit ein erstes Speichermedium, das zur Speicherung des mindestens einen ersten Datensatzes eingerichtet ist, und/oder die mindestens eine zweite Auswerteeinheit ein zweites Speichermedium, das zur Speicherung des mindestens einen zweiten Datensatzes eingerichtet ist, und/oder die mindestens eine dritte Auswerteeinheit ein drittes Speichermedium, das zur Speicherung des mindestens einen dritten Datensatzes eingerichtet ist, umfassen.

Für weitere Einzelheiten in Bezug auf das ein System zur Herstellung eines an eine Brillenfassung einer Brille angepassten mindestens einen Brillenglases wird auf die übrige Beschreibung verwiesen.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale der Unteransprüche für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine schematische Darstellung einer bevorzugten Ausführungsform des erfindungsgemäßen Verfahrens zur Herstellung einer Brille;
- Figur 2: eine schematische Darstellung einer Augenpartie eines Nutzers mit von dem Nutzer aufgesetzter Brille unter habitueller Kopf- und Körperhaltung und festgelegter Blickrichtung des Nutzers aus frontaler Perspektive (Figur 2A) und in perspektivischer Darstellung von schräg oben (Figur 2B);
- Figur 3: eine schematische Darstellung eines dreidimensionalen Modells einer Brillenfassung (Figur 3A) sowie eine Vielzahl an Datenpunkten, die die Fassungsrandkurve der Brillenfassung entsprechen (Figur 3B);
- Figur 4: eine schematische Darstellung der geometrischen Verhältnisse bei einer Festlegung von augenseitigen Rückflächen und augenabgewandten Vorderflächen eines Brillenglases (Figur 4A), eine angestrebte Verteilung eines Abbildungsfehlers (Figur 4B) sowie eine nach Optimierung erhaltene Verteilung des Abbildungsfehlers (Figur 4C);
- Figur 5: eine schematische Darstellung eines Brillenglasrohlings zur Einbringung in eine erste Bearbeitungsvorrichtung (Figur 5A) sowie eine weitere, auf der Vorderfläche des Brillenglases eingebrachte Markierung (Figur 5B); und
- Figur 6: eine schematische Darstellung einer Markierung auf der Rückfläche des Brillenglases vor Einbringung in eine zweite Bearbeitungsvorrichtung (Figur 6A) sowie eines Polieren eines fixierten Brillenglases mittels einer Poliereinrichtung (Figur 6B).

### Beschreibung der Ausführungsbeispiele

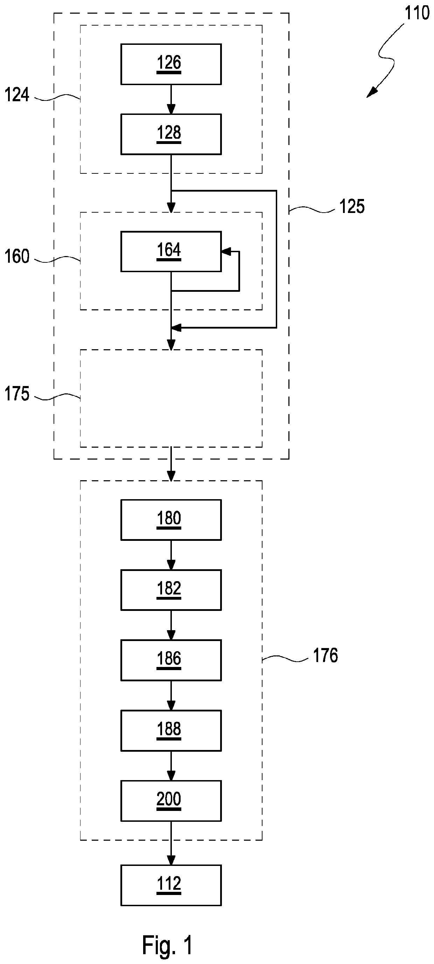

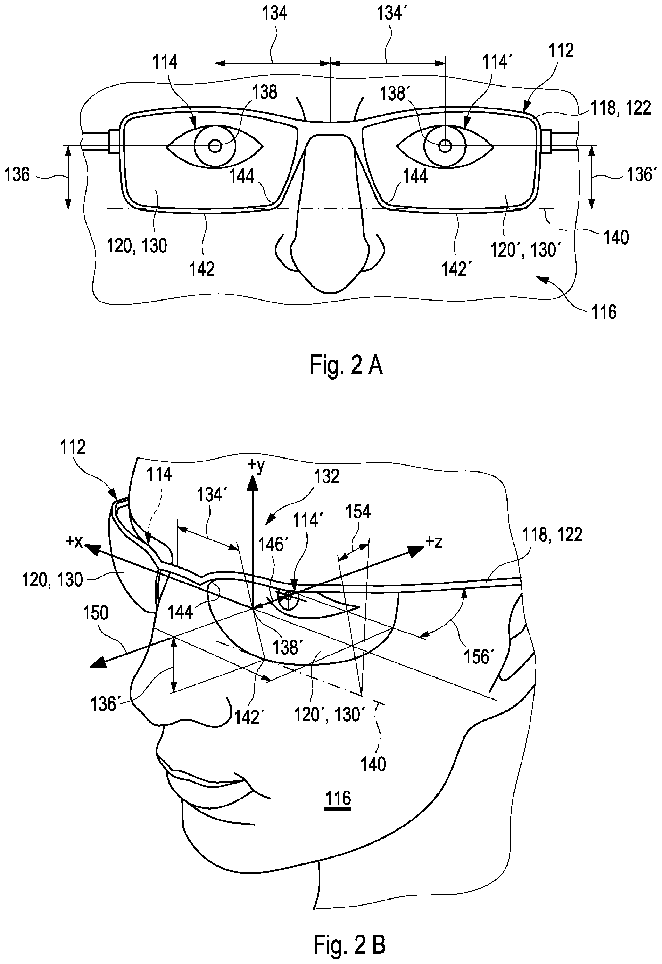

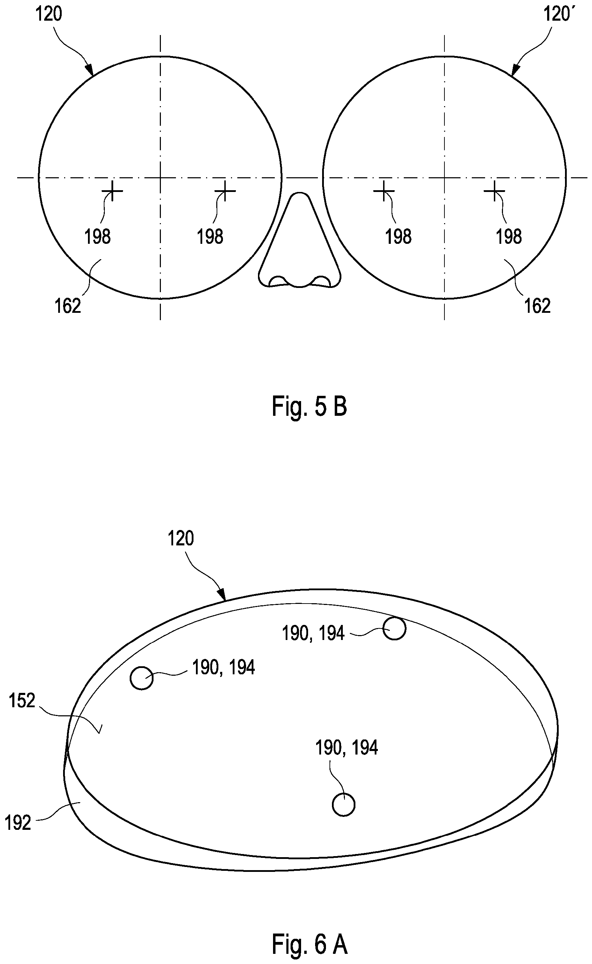

Figur 1 zeigt eine schematische Darstellung einer bevorzugten Ausführungsform des erfindungsgemäßen Verfahrens 110 zur Herstellung einer Brille 112 für beide Augen 114, 114' eines Nutzers 116. Wie insbesondere in den Figuren 2A und 6A schematisch dargestellt, umfasst die Brille 112 eine Brillenfassung 118 und zwei hierein eingebrachtes Brillengläser 120, 120`. Hierbei ist die in den Figuren 2Aund 3A schematisch dargestellte Brillenfassung 118 eine Vollrandbrille, die einen Brillenfassungsrahmen 122 aufweist, welcher die beiden Brillengläser 120, 120` umschließt. Die folgende Beschreibung bezieht sich daher, der Einfachheit halber, auf Vollrandbrillen mit zwei hierein eingebrachten Brillengläsern 120, 120`. Jedoch kann das vorliegende Verfahren 110 zur Herstellung der Brille 112 sinngemäß auch für eine in Figur 2B schematisch dargestellte Halbrandbrille, in welcher die beiden Brillengläser 120, 120` nur teilweise an den Brillenfassungsrahmen 122 angrenzen, oder für eine rahmenlose Brille, in welchen die beiden Brillengläser 120, 120` über eine Bohrung zur Aufnahme einer Halterung zur Befestigung an dem Brillenfassungsrahmen 122 verfügen, angewandt werden. Auch eine Anwendung auf ein Monokel, das einen Brillenfassungsrahmen 122, der nur zur Aufnahme eines einzelnen Brillenglases 120 für ein einzelnes Auge 114 des Nutzers 116 eingerichtet ist, ist sinngemäß möglich.

In einem Bereitstellungsschritt 124 erfolgt gemäß Schritt (i) eines computerimplementierten Verfahrens 125 zur Erzeugung von Daten zur Herstellung des an die Brillenfassung 118 der Brille 112 angepassten Brillenglases 120, 120` oder zum Erzeugen einer virtuellen Repräsentation des Brillenglases 120, 120` oder der Brille 112 zunächst ein Bereitstellen eines auf einem Speichermedium gespeicherten ersten Datensatzes, wobei der erste Datensatz mindestens einen Zentrierwert 126 und ein dreidimensionales Modell 128 der Brillenfassung 118 umfasst. Wie insbesondere in den Figuren 2A und 2B schematisch dargestellt, erfolgt die Bestimmung des mindestens einen Zentrierwerts 126 mittels einer Zentrieraufnahme, wobei die Zentrieraufnahme, wie in Figur 2A und 2B dargestellt, bevorzugt mit der von dem Nutzer 116 aufgesetzten Brille 112 unter habitueller Kopf- und Körperhaltung und festgelegter Blickrichtung des Nutzers 116 durch von der Brille 112 umfasste Stützscheiben 130, 130` oder Dummygläser.

Wie weiterhin insbesondere in den Figuren 2A und 2B schematisch dargestellt, kann der mindestens eine Zentrierwert 126 mindestens einen der folgende Datenwerte umfassen, wobei jeder der Datenwerte bevorzugt in einem Koordinatensystem der Augen 114, 114' des Nutzers 116, das wie in den Figuren 2A und 2B schematisch dargestellt, die Koordinaten x, y, z aufweist und das insbesondere als gemeinsames Koordinatensystem 132 verwendet werden kann, angegeben wird:
- eine jeweilige Pupillendistanz 134, 134` für die beiden Augen 114, 114' des Nutzers 116;
- einen jeweils auch als Einschleifhöhe 136, 136` bezeichneten Abstand eines jeweiligen Durchblickpunkts 138, 138` für jedes der beiden Augen 114, 114' zu einer Geraden 140 durch mindestens einen jeweiligen untersten Punkt 142, 142` einer Fassungsrandkurve 144 der Brillenfassung 118;
- einen jeweils auch als ersten Hornhautscheitelabstand 146, 146` bezeichneten Abstand eines Hornhautscheitels 148, 148` des jeweiligen Auges 114, 114' des Nutzers 116 zu dem jeweiligen Durchblickpunkt 138, 138' einer zugehörigen Blickrichtung 150, 150' durch eine jeweilige augenseitige Rückfläche 152, 152' der betreffenden Stützscheiben 130, 130`.

Weniger geeignet, da sie lediglich auf Näherungen basieren, die erfindungsgemäß vermieden werden sollen, sind ein als "Vorneigungswinkel" bezeichneter erster Winkel 154, um den eine Fassungsebene (nicht dargestellt) der Brillenfassung 118 insbesondere gegenüber einer Senkrechten, die parallel zu der Richtung y in dem gemeinsamen Koordinatensystem 132 liegt, geneigt ist, sowie jeweils ein zweiter Winkel 156, 156` zwischen einer jeweiligen Scheibenebene (nicht dargestellt) der beiden Brillengläser 120, 120` und der Fassungsebene.

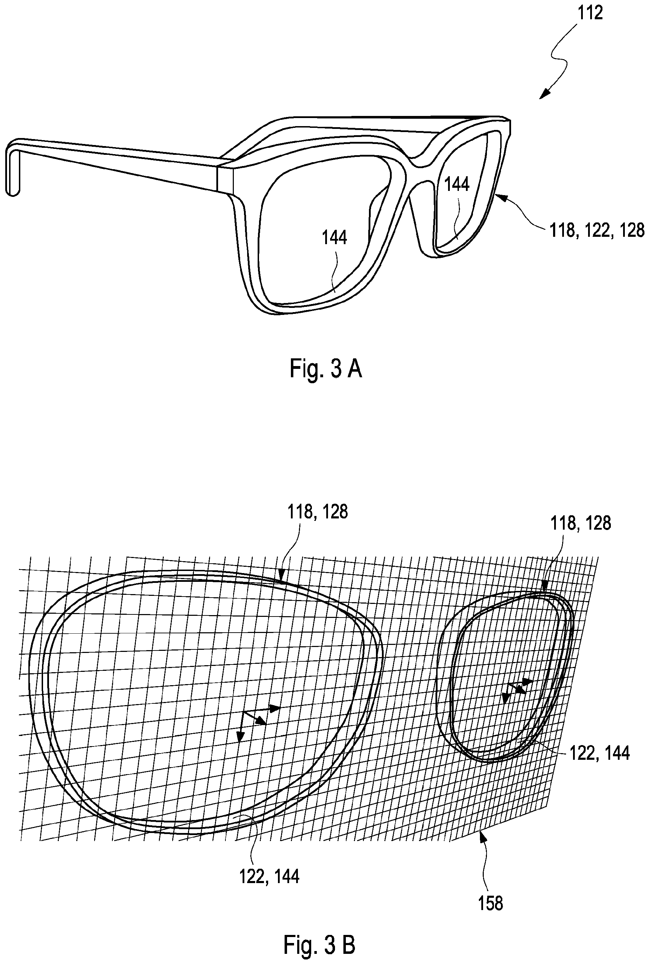

Wie weiterhin insbesondere in den Figuren 3A und 3B schematisch dargestellt, kann das dreidimensionale Modell 128 der Brillenfassung 118 eine Vielzahl an Datenpunkten umfassen, die die Fassungsrandkurve 144 der Brillenfassung 118 betreffen. Wie Figur 3 A schematisch zeigt, können hierzu Konstruktionsdaten der Brillenfassung 118 insbesondere direkt aus Modelldaten eines Herstellers der Brillenfassung 118, vorzugsweise aus CAD-Daten, bereitgestellt werden. Alternativ oder zusätzlich kann die Vielzahl der Datenpunkte, die auf einer Innenkontur des Brillenfassungsrahmen 122 angeordnet sind, vorzugsweise in einem optischen Messlabor messtechnisch mittels einer optischen Aufnahmeeinheit erfasst werden, bevorzugt mittels eines Tracers abgetastet oder mittels eines Scanners, insbesondere mittels eines optischen Scanners, aufgenommen werden. In Figur 3B ist die Vielzahl der Datenpunkte auf der Innenkontur des Brillenfassungsrahmen 122 schematisch vor einem Raster 158, welches zwei Koordinaten eines Koordinatensystems widerspiegelt, dargestellt.

In einem Linsendesignschritt 160 erfolgt gemäß Schritt (ii) des computerimplementierten Verfahrens 125 ein Erstellen eines auf einem Speichermedium gespeicherten zweiten Datensatzes, wobei der fertig gestellte zweite Datensatz mindestens einen jeweilige geometrischen Werte in Bezug auf der die Rückflächen 152, 152` und/oder von augenabgewandten Vorderflächen 162, 162` jedes Brillenglases 120, 120` umfasst. Zur Erstellung des zweiten Datensatzes werden Datenwerte des ersten Datensatzes verwendet, wobei hierzu ein oder üblicherweise mehrere Optimierungsschritte 164 in Bezug auf den mindestens einen geometrischen Werte der augenseitigen Rückflächen 152, 152` der beiden Brillengläser 120, 120` durchgeführt werden.

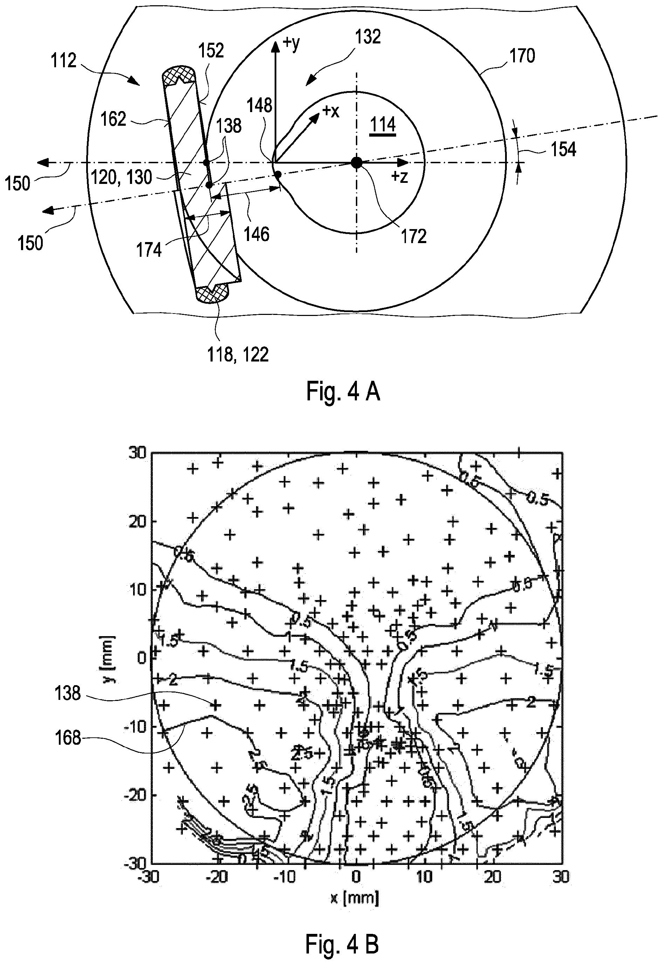

Wie insbesondere Figur 4A schematisch zeigt, kann zunächst eine Festlegung der augenabgewandten sphärischen Vorderflächen 162, 162` jedes Brillenglases 120, 120` nach optischen und/oder ästhetischen Gesichtspunkten erfolgen. Wie oben erläutert, kann hierbei ein Radius der 162, 162` jedes Brillenglases 120, 120` bevorzugt aus Halbfabrikaten mit sphärischen oder asphärisch rotationssymmetrischen konvexen 162, 162` mit wenigen unterschiedlichen Radien ausgewählt werden. Bereits bei der Auswahl der Vorderflächen 162, 162` kann es vorteilhaft sein, eine Anpassung der Vorderflächen 162, 162` an die Fassungsform der Fassungsrandkurve 144 der Brillenfassung 118 vorzunehmen. Anschließend kann eine Festlegung einer Position der Vorderflächen 162, 162` vor den Augen 114, 114' unter Berücksichtigung der Fassungsform und des dreidimensionalen Verlaufs der Fassungsrandkurve 144 erfolgen, wobei hier bevorzugt das gemeinsame Koordinatensystem 132 verwendet werden kann.

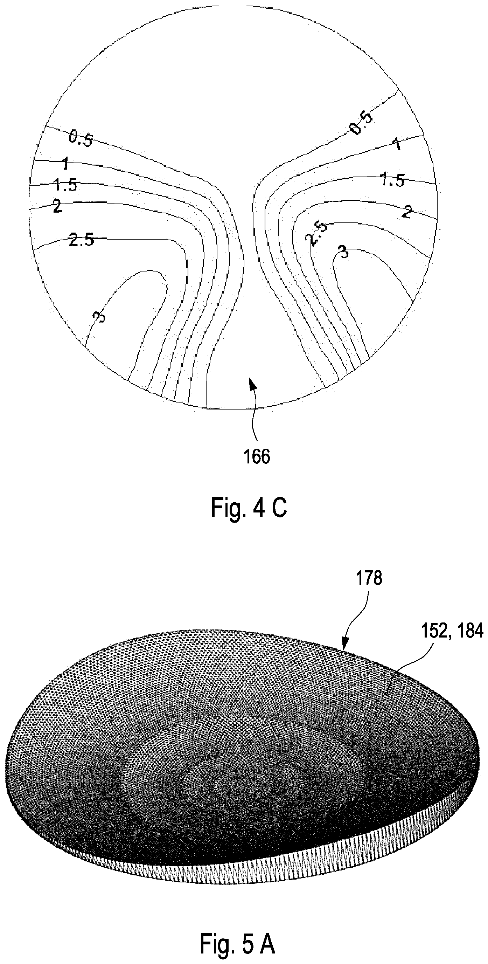

Zur Ermittlung der augenseitigen Rückflächen 152, 152` der Brillengläser 120, 120` kann bevorzugt angenommen werden, dass jeweils an mindestens einem vorher festgelegten Bezugspunkt auf den Vorderflächen 162, 162` der Brillengläser 120, 120` die gewünschte Korrektionswirkung 166 der Brillengläser 120, 120` in Bezug auf die Refraktionsfehler des Auges 114, 114' des Nutzers 116 erreichbar ist. Figur 4C zeigt hierzu schematisch eine nach Optimierung erhaltene Verteilung eines Abbildungsfehlers in Form eines Restastigmatismus für ein ausgewähltes Brillenglas 120, das dazu eingerichtet ist, einen astigmatischen Refraktionsfehler betreffenden des Auges 114 des Nutzers 116 zu korrigieren. Hierbei soll die nach der Optimierung erhaltene Verteilung des Abbildungsfehlers, den der Nutzer 116 des ausgewählten Brillenglases 120 als Unschärfe wahrnimmt, möglichst gut einer in Figur 4B schematisch dargestellten, angestrebten Zielverteilung 168 entsprechen. Die in Figur 4B dargestellten Kreuze markieren jeweils einen Durchblickpunkt 138, 138' auf dem ausgewählten Brillenglas 120, an dem eine optische Berechnung des Abbildungsfehlers vorgenommen wurde. Die weiterhin in Figur 4B dargestellten Iso-Linien wurden hierbei anhand von Zielwerten an einer relativ geringen Anzahl von Kreuzen berechnet, wodurch der unruhige Verlauf Iso-Linien erklärt werden kann. Um eine möglichst gute Anpassung an die angestrebte Zielverteilung 168 zu erreichen, kann, ausgehend von einer anfangs festgelegten Startfläche, bevorzugt eine iterative Optimierung in Bezug auf die jeweiligen Rückflächen 152, 152` durchgeführt werden. Hierbei kann die Wirkung jedes für den Nutzer 116 optimierten Brillenglases 120, 120` an einer Vielzahl von Durchblickpunkten 138, 138' auf dem betreffenden Brillenglas 120, 120' in Bezug auf eine Scheitelkugel 170, die insbesondere in Figur 4B dargestellt sind, berechnet und mit einem vorgegebenen Zielwert verglichen. Hierbei kann bevorzugt eine Drehung des jeweiligen Auges 114, 114' um einen vorher festgelegten Augendrehpunkt 172 unter Berücksichtigung der oben definierten Listing`schen Regel simuliert werden.

Während der iterativen Optimierung der augenseitigen Rückflächen 152, 152` der Brillengläser 120, 120` kann insbesondere eine Änderung einer Dicke 174 des jeweiligen Brillenglases 120, 120' erfolgen, wobei die Dicke 174 durch einen Abstand zwischen der jeweiligen Vorderfläche 162, 162` und der zugehörigen Rückfläche 152, 152`des betreffenden Brillenglases 120, 120` festgelegt ist. In Folge der Änderung der Dicke 174 des jeweiligen Brillenglases 120, 120` kann sich während der iterativen Optimierung insbesondere der Hornhautscheitelabstand 146 ändern. Es kann daher vorteilhaft sein, die Korrektionswirkung 166 des jeweiligen Brillenglases 120, 120` in dem vorher festgelegten Bezugspunkt in jedem Iterationsschritt zu berechnen und derart auf den ursprünglich festgelegten Hornhautscheitelabstand 146 umzurechnen, dass die so berechnete, in Figur 4C beispielhaft dargestellte Korrektionswirkung 166 des jeweiligen Brillenglases 120, 120` mit dem gewünschten Korrektionswert für das jeweilige Brillenglas 120, 120' übereinstimmt.

Nach erfolgter Optimierung liegen die Datenwerte der augenseitigen Rückflächen 152, 152` der Brillengläser 120, 120` üblicherweise in einem eigenen Koordinatensystem vor. Die Transformation dieser Datenwerte aus dem eigenen Koordinatensystem in das gemeinsame Koordinatensystem 132 ist jedoch bekannt. Nach Abschluss des Linsendesignschritts 160 liegt, auf einem Speichermedium gespeichert, somit ein so genannter "digitaler Zwilling" der Brille 112 vor, der aus den Datenwerten des ersten Datensatzes und des zweiten Datensatzes gebildet ist.

In einem Bestimmungsschritt 175 erfolgt gemäß Schritt (iii) des computerimplementierten Verfahrens 125 ein Erstellen eines auf einem Speichermedium gespeicherten dritten Datensatzes, wobei der dritte Datensatz zur Herstellung der Brillengläser 120, 120` aus jeweils einen Brillenglasrohling 178 und/oder zur virtuellen Repräsentation der Brillenfassung 118 oder der Brille 112 auf einer optischen Anzeigeeinrichtung, insbesondere einem mit einem Computer verbundenen Monitor oder einem Bildschirm, z.B. eines berührungsempfindlichen Bildschirms (Touchscreen), eines mobilen Kommunikationsgerätes, insbesondere eines Smartphones oder Tablets eingerichtet ist. Wie oben näher erläutert, erfolgt das Erstellen des dritten Datensatzes unter Verwendung des in dem Bereitstellungsschritt 124 erstellten ersten Datensatzes und des in dem Linsendesignschritt 160 erstellten zweiten Datensatzes.

Während der Durchführung eines Fertigungsschritts 176 kann in einem Fixierungsschritt 180 gemäß Schritt a) für jedes Brillenglas 120, 120' jeweils ein Einbringen des zugehörigen Brillenglasrohlings 178 in eine Halteeinrichtung (nicht dargestellt) erfolgen, die zur Fixierung des Brillenglasrohlings 178 eingerichtet ist, insbesondere mittels eines Blockens des Brillenglasrohlings 178. Für Einzelheiten in Bezug auf das Blocken des Brillenglasrohlings 178 wird auf die obige Beschreibung verwiesen.

In einer bevorzugten Ausführungsform kann nach erfolgter Fixierung des Brillenglasrohlings 178, wie Figur 5A schematisch zeigt, in einem ersten Bearbeitungsschritt 182 gemäß Schritt c) eine Bearbeitung des Brillenglasrohlings 178 in einer dafür eingerichteten ersten Bearbeitungsvorrichtung (nicht dargestellt) erfolgen, die zur Erstellen der jeweiligen augenseitigen Rückfläche 152, 152' des Brillenglases 120, vorzugsweise durch Materialabtrag auf der zugehörigen Fläche 184 des Brillenglasrohlings 178, insbesondere durch Fräsen, Drehen, Schleifen, Feinschleifen und/oder Polieren der betreffenden Fläche 184 des Brillenglasrohlings 178, eingerichtet ist. Hierbei können bevorzugt Halbfabrikate eingesetzt werden, die über eine fertiggestellte Vorderfläche 162, 162` verfügen. Vorzugsweise können vor der Durchführung des ersten Bearbeitungsschritts 182 diejenigen Glasflächen des Brillenglasrohlings 178, die nicht bearbeitet werden, mit einer Schutzeinrichtung, insbesondere einer Folie oder einer Lackierung, versehen werden. Um die Bearbeitung des Brillenglasrohlings 178 in dem ersten Bearbeitungsschritt 182 vorzunehmen, um so die gewünschte Rückfläche 152, 152' des Brillenglases 120 gemäß den Datenwerten des zweiten Datensatzes zu erhalten, kann hierzu eine Koordinatentransformation aus dem gemeinsamen Koordinatensystem 132 in ein eigenes Koordinatensystem der Halteeinrichtung und/oder der ersten Bearbeitungsvorrichtung erfolgen.

Nach erfolgter Bearbeitung des Brillenglasrohlings 178 während des ersten Bearbeitungsschritts 182 kann in einem weiteren Fixierungsschritt 186 ein Einbringen des Brillenglases 120, 120` in eine weitere Halteeinrichtung (nicht dargestellt) erfolgen, die zur Fixierung des Brillenglases 120, 120` eingerichtet ist. Wie Figur 6A schematisch zeigt, kann hierbei insbesondere vor einem zweiten Bearbeitungsschritt 188 eine Markierung 190 auf der Rückfläche 152, 152' des Brillenglases 120, 120` unter Verwendung des dritten Datensatzes aufgebracht werden, so dass die Bearbeitung eines lateralen Randes 192 des Brillenglases 120, 120' während des zweiten Bearbeitungsschritts 188 unter Verwendung der Markierung 190 erfolgen kann, wodurch eine gewünschte Form des Randes 192 des Brillenglases 120, 120` erhalten werden kann. Die Markierung 190 auf der Rückfläche 152, 152' des Brillenglases 120 kann, wie Figur 6A zeigt, bevorzugt in Form von Referenzmarken, insbesondere in Form von mindestens drei, bevorzugt genau drei, Referenzpunkten 194, die auf einer Sphäre liegen, vorliegen.

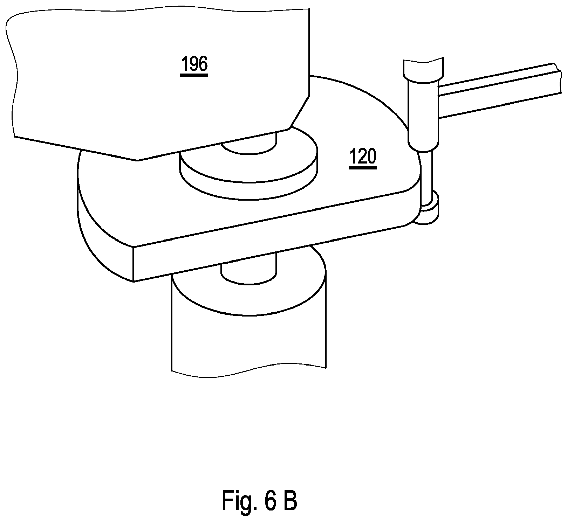

Nach erfolgter Fixierung des Brillenglases 120, 120` in dem weiteren Fixierungsschritt 186 kann der zweite Bearbeitungsschritt 188 gemäß Schritt b) durchgeführt werden, der zur Bearbeitung eines lateralen Randes 192 des Brillenglases 120, 120', vorzugsweise durch einen Materialabtrag am Rand 192 des Brillenglases 120. 120', insbesondere durch Fräsen, Drehen, Schleifen, Feinschleifen und/oder Polieren, eingerichtet ist. Beispielhaft ist in Figur 6B ein Polieren des fixierten Brillenglases 120 mittels eines Poliereinrichtung 196 dargestellt. Hierbei kann eine Festlegung des Materialabtrags durch eine Übertragung der Datenwerte aus dem mindestens einen dritten Datensatz, der, wie oben erwähnt, aus den Datenwerten des ersten Datensatzes und des zweiten Datensatzes gebildet ist und der daher sowohl die Datenwerte in Bezug auf das Brillenglas 120, 120' als auch in Bezug auf die Brillenfassung 118 aufweist, mittels einer Schnittstelle an eine zweite Bearbeitungsvorrichtung (nicht dargestellt) erfolgen. Für weitere Details zu der zweiten Bearbeitungsvorrichtung und der zugehörigen Schnittstelle wird auf die obige Beschreibung verwiesen.

Das Fixieren des Brillenglases 120, 120` in der zweiten Halteeinrichtung und die anschließende Bearbeitung des Randes 192 des Brillenglases 120, 120` in der zweiten Bearbeitungsvorrichtung erfolgen derart, dass eine Randform des Brillenglases 120, 120` auch tatsächlich den Datenwerten des ersten Datensatzes entspricht. Hierzu kann vorzugsweise eine genau festgelegte Koordinatentransformation aus dem gemeinsamen Koordinatensystem 132 in ein eigenes Koordinatensystem der zweiten Halteeinrichtung und/oder der zweiten Bearbeitungsvorrichtung erfolgen kann, wodurch die tatsächliche Lage der hierdurch betroffenen Punkte im Raum unverändert bleibt.

Figur 5B zeigt, dass auf der Vorderfläche 162, 162` des Brillenglases 120, 120` zusätzlich eine oder mehrere weitere Markierungen 198 aufgebracht werden kann, wofür vorzugsweise ein Laser eingesetzt werden kann, der die gewünschte eine oder mehreren weiteren Markierungen 198 auf dem während des weiteren Fixierungsschritts 186 bereits fixierten Brillenglas 120, 120' vornehmen kann. Andere Arten der Aufbringung der einen oder mehreren weiteren Markierungen 198 sind jedoch denkbar.

In einer weiteren, ebenfalls bevorzugten Ausführungsform des Fertigungsschrittes 176 (nicht dargestellt) kann der Brillenglasrohling 178 gemäß Schritt a) in eine einzige Halteeinrichtung (nicht dargestellt), die zur Fixierung des Brillenglasrohlings 178 sowohl während der Fixierungsschritts 180 als auch des weiteren Fixierungsschritts 186 eingerichtet sein kann, eingebracht werden. Hierbei kann gemäß Schritt b) zunächst der laterale Rand 192 des Brillenglases 120, 120', vorzugsweise durch einen Materialabtrag am Rand 192 des Brillenglases 120, 120', insbesondere durch Fräsen, Drehen, Schleifen, Feinschleifen und/oder Polieren, bearbeitet werden, wodurch die Randform des Brillenglases 120, 120` festgelegt wird. Hieran anschließend kann der Brillenglasrohling 178 in der einzigen Halteeinrichtung verbleiben, um dort gemäß Schritt c) zumindest eine Fläche des Brillenglasrohlings 178, insbesondere durch Fräsen, Drehen, Schleifen, Feinschleifen und/oder Polieren, derart zu bearbeiten, dass die gewünschte Rückfläche 152, 152' des Brillenglases 120, 120` gemäß den Datenwerten des zweiten Datensatzes erhalten wird, welche die gewünschte Korrekturwirkung des Brillenglases 120. 120` aufweist. Für weitere Einzelheiten zu dieser Ausführungsform wird auf die obige Beschreibung verwiesen. Darüber hinaus sind weitere bevorzugte Ausführungsformen des Fertigungsschrittes 176 denkbar.

Schließlich erfolgt in einem Fertigstellungsschritt 200 ein Einbringen der fertig gestellten Brillengläser 120, 120` in die Brillenfassung 118, wodurch die gewünschte Brille 112 erhalten wird. Dadurch, dass im vorliegenden computerimplementierten Verfahren 125 die Datenwerte jedes Datensatzes zwar jeweils in Bezug auf ein eigenes Koordinatensystem angegeben werden können, hierbei alle Datenwerte jedes Datensatzes jedoch in dem für alle Datensätze gemeinsamen Koordinatensystem 132 angegeben werden, können sich etwaig auftretende Abweichungen, Fehler und/oder Toleranzen nicht länger aufaddieren. Damit entspricht die fertiggestellte Brille 112 exakt den Anforderungen des Nutzers 116, dadurch dass die Brillenfassung 118 passgenau auf den Kopf des Nutzers 116 angepasst ist und die Brillengläser 120, 120` die Refraktionsfehler des Nutzers 116 zutreffend korrigieren, ohne dass es bei dem Nutzer 116 zu einer Unverträglichkeit kommen kann. In Folge trägt der Nutzer 116 die angefertigte Brille 112 sehr gern und hat daher keine Veranlassung, etwaige Reklamationen in Bezug auf die angefertigte Brille 112 insbesondere dem Augenoptiker gegenüber vorzubringen.

### Bezugszeichenliste

- 110: Verfahren zur Herstellung einer Brille
- 112: Brille
- 114, 114': Auge
- 116: Nutzer
- 118: Brillenfassung
- 120, 120': Brillenglas
- 122: Brillenfassungsrahmen
- 124: Bereitstellungsschritt
- 125: computerimplementiertes Verfahren
- 126: Zentrierwert
- 128: (dreidimensionales) Modell
- 130, 130`: Stützscheibe (Dummyglas)
- 132: gemeinsame Koordinatensystem
- 134, 134`: Pupillendistanz
- 136, 136`: Einschleifhöhe
- 138, 138': Durchblickpunkt
- 140: Gerade
- 142, 142`: unterster Punkt
- 144: Fassungsrandkurve
- 146, 146`: erster Hornhautscheitelabstand
- 148, 148`: Hornhautscheitels
- 150, 150`: Blickrichtung
- 152, 152': augenseitige Rückfläche
- 154: erster Winkel (Vorneigungswinkel)
- 156, 156`: zweiter Winkel
- 158: Raster
- 160: Linsendesignschritt
- 162: Vorderfläche
- 164: Optimierungsschritt
- 166: Korrektionswirkung
- 168: Zielverteilung
- 170: Scheitelkugel
- 172: Augendrehpunkt
- 174: Dicke
- 175: Bestimmungsschritt
- 176: Fertigungsschritt
- 178: Brillenglasrohling
- 180: Fixierungsschritt
- 182: Bearbeitungsschritt
- 184: Fläche (des Brillenglasrohlings)
- 186: weiterer Fixierungsschritt
- 188: Weiterer Bearbeitungsschritt
- 190: Markierung
- 192: Rand (des Brillenglases)
- 194: Referenzpunkt
- 196: Poliereinrichtung
- 198: weitere Markierung
- 200: Fertigstellungsschritt

## Patentansprüche

1. Computerimplementiertes Verfahren (125) zur Erzeugung von Daten zur Herstellung eines an eine Brillenfassung (118) einer Brille (112) angepassten mindestens einen Brillenglases (120, 120'), wobei das computerimplementierte Verfahren die folgenden Schritte umfasst:
(i) Bereitstellen mindestens eines auf einem Speichermedium gespeicherten ersten Datensatzes, wobei der erste Datensatz zumindest folgende Datenwerte umfasst:
- mindestens einen Zentrierwert (126);
- ein dreidimensionales Modell (128) der Brillenfassung (118);
(ii) Erstellen mindestens eines auf einem Speichermedium gespeicherten zweiten Datensatzes unter Verwendung des mindestens einen ersten Datensatzes, wobei der zweite Datensatz zumindest folgende Datenwerte umfasst:
- mindestens einen geometrischen Wert mindestens einer Fläche des mindestens einen Brillenglases (120, 120');
**dadurch gekennzeichnet,**
**dass** das Verfahren den folgenden Schritt umfasst:
(iii) Erstellen mindestens eines auf einem Speichermedium gespeicherten dritten Datensatzes zum Herstellen des mindestens einen Brillenglases (120, 120') aus mindestens einem Brillenglasrohling (178) und zum Einschleifen und/oder Einbringen des mindestens einen Brillenglases (120, 120') in die Brillenfassung (118) unter Verwendung des mindestens einen ersten Datensatzes und des mindestens einen zweiten Datensatzes, wobei der mindestens eine dritte Datensatz ein Fertigungsdatensatz ist, wobei jeder Datenwert des mindestens einen dritten Datensatzes mindestens eine Information in Bezug auf die Herstellung des mindestens einen Brillenglases (120, 120') oder zum Einschleifen und/oder Einbringen des mindestens einen Brillenglases (120, 120') in die Brillenfassung (118) umfasst, wobei die Information in einem Verfahren zur Herstellung mindestens einer Brille (112) eingesetzt wird,
wobei die Datenwerte jedes Datensatzes dadurch einen räumlichen Bezug zueinander aufweisen, dass die Datenwerte jedes Datensatzes durchgehend in Bezug auf ein jeweiliges Koordinatensystem angegeben werden, wobei alle Datenwerte jedes Datensatzes in einem für alle Datensätze gemeinsamen Koordinatensystem (132) angegeben werden.

2. Computerimplementiertes Verfahren (125) nach dem vorangehenden Anspruch, **dadurch gekennzeichnet, dass** das gemeinsame Koordinatensystem (132) ausgewählt ist aus einem Koordinatensystem, das sich auf eine Lage der mindestens einen Pupille des mindestens einen Auges (114, 114') des Nutzers (116) und der hiervon ausgehenden Blickrichtung (150, 150') des mindestens einen Auges (114, 114') des Nutzers (116) durch das mindestens eine Brillenglas (120, 120') bezieht.

3. Computerimplementiertes Verfahren (125) nach dem vorangehenden Anspruch, **dadurch gekennzeichnet, dass** ein eigenes Koordinatensystem für jedes der beiden Augen (114, 114') des Nutzers (116) gewählt wird, das sich auf eine Lage der jeweiligen Pupille des betreffenden Auges (114, 114') des Nutzers (116) und der hiervon ausgehenden Blickrichtung (150, 150') des betreffenden Auges (114, 114') des Nutzers (116) durch das zugehörige Brillenglas (120, 120') bezieht.

4. Computerimplementiertes Verfahren (125) nach einem der beiden vorangehenden Ansprüche, **dadurch gekennzeichnet, dass** das eigene Koordinatensystem für jedes der beiden Augen
- eine erste Achse parallel zu einer Blickrichtung (150, 150') des Auges (114, 114') des Nutzers (116);
- eine zweite Achse senkrecht zu der ersten Achse parallel zur Richtung der Gravitation; und
- eine dritte Achse senkrecht sowohl zu der ersten Achse als auch zu der zweiten Achse
aufweist.

5. Computerimplementiertes Verfahren (125) nach einem der vorangehenden Ansprüche, **dadurch gekennzeichnet, dass** eine Bestimmung des mindestens einen Zentrierwerts (126) durch Erstellen einer Zentrieraufnahme mit von dem Nutzer (116) aufgesetzter Brillenfassung (118) unter habitueller Kopf- und Körperhaltung und festgelegter Blickrichtung des Nutzers durch mindestens eine in die Brillenfassung (118) eingebrachte Stützscheibe (130) erfolgt.

6. Computerimplementiertes Verfahren (125) nach einem der vorangehenden Ansprüche, **dadurch gekennzeichnet, dass** der mindestens eine Zentrierwert (126) mindestens einen der folgende Datenwerte umfasst:
- mindestens einen Abstand (146, 146') eines Hornhautscheitels (148, 148') mindestens eines Auges (114, 114') des Nutzers zu einem Durchblickpunkt (138, 138') mindestens einer Blickrichtung (150, 150') durch mindestens eine Fläche des Brillenglases (120, 120`);
- mindestens einen Abstand (146, 146') des Durchblickpunkts (138, 138') zu einer Geraden (140) durch mindestens einen untersten Punkt (142, 142') einer Fassungsrandkurve (144) der Brillenfassung (118) oder einer Randkurve des mindestens einen Brillenglases (120, 120')
- mindestens einen horizontalen Abstand zwischen jeweils einer identischen Position auf jeder der beiden Brillengläser (120, 120').

7. Computerimplementiertes Verfahren (125) nach dem vorangehenden Anspruch, **dadurch gekennzeichnet, dass** das dreidimensionales Modell (128) der Brillenfassung (118) eine Vielzahl an Datenpunkten umfasst, die die Fassungsrandkurve (144) der Brillenfassung (118) betreffen.

8. Computerimplementiertes Verfahren (125) nach dem vorangehenden Anspruch, **dadurch gekennzeichnet, dass** die Vielzahl der Datenpunkte unter Verwendung der Brillenfassung (118) messtechnisch erfasst werden oder aus bereitgestellten räumlichen Konstruktionsdaten der Brillenfassung (118) ausgewählt werden.

9. Computerimplementiertes Verfahren (125) nach einem der vorangehenden Ansprüche, **dadurch gekennzeichnet, dass** die geometrischen Datenwerte sich auf eine räumliche Form des Brillenglases (120, 120') beziehen, wobei die räumliche Form des Brillenglases (120, 120') eine sphärische oder asphärisch rotationssymmetrische konvexe Vorderfläche (162, 162') und eine zur Korrektion mindestens eine Refraktionsfehlers mindestens eines Auges (114, 114') des Nutzers (116) ausgebildete Rückfläche (152, 152`) des Brillenglases (120, 120') umfasst.

10. Computerimplementiertes Verfahren (125) nach dem vorangehenden Anspruch, **dadurch gekennzeichnet, dass**, ausgehend von einer festgelegten Startfläche, mindestens ein Optimierungsschritt (164) zur Bestimmung der Rückfläche (152, 152') für den Nutzer (116) vorgenommen wird, wobei als Randbedingung für den mindestens einen Optimierungsschritt (164) der mindestens eine Zentrierwert (126) aus dem mindestens einen ersten Datensatz verwendet wird.

11. Computerimplementiertes Verfahren (125) nach dem vorangehenden Anspruch, **dadurch gekennzeichnet, dass** der mindestens eine zweite Datensatz mindestens einen weiteren Datenwert umfasst, der eine Glasauswahl für das mindestens eine Brillenglas (120, 120') angibt.

12. Computerprogramm zur Durchführung eines computerimplementierten Verfahrens (125) nach einem der Ansprüche 1 bis 11.

13. Verfahren (110) zur Herstellung einer Brille (112), wobei das Verfahren (110) die folgenden Schritte umfasst:
(I) Erzeugung von Daten zur Herstellung eines an eine Brillenfassung (118) einer Brille (112) angepassten mindestens einen Brillenglases (120, 120') gemäß einem computerimplementierten Verfahren (125) nach einem der Ansprüche 1 bis 11;
(II) Herstellen des mindestens einen Brillenglases (120, 120') aus mindestens einem Brillenglasrohling (178) und Einschleifen und/oder Einbringen des mindestens einen Brillenglases (120, 120') in die Brillenfassung (118) unter Verwendung des dritten Datensatzes der gemäß Schritt (I) erzeugten Daten.

14. Verfahren (110) nach dem vorangehenden Anspruch, wobei das Herstellen des mindestens einen Brillenglases (120, 120') aus dem mindestens einen Brillenglasrohling (178) die folgenden Schritte umfasst:
a) Einbringen eines Brillenglasrohlings (178) in eine Halteeinrichtung zur Fixierung des Brillenglasrohlings (178);
b) Bearbeiten eines lateralen Randes (192) des Brillenglasrohlings (178), wodurch eine Randform des Brillenglases (120, 120') festgelegt wird;
c) Bearbeiten zumindest einer Fläche des Brillenglasrohlings (178), wodurch eine Korrekturwirkung des Brillenglases (120, 120`) erhalten wird;
wobei die Schritte a) bis c) jeweils unter Verwendung des mindestens einen dritten Datensatzes ausgeführt werden.

15. Verfahren (110) nach dem vorangehenden Anspruch, wobei vor Schritt b) mindestens eine Markierung (190) auf die Rückfläche (152, 152') des Brillenglases (120, 120') unter Verwendung des mindestens einen dritten Datensatzes aufgebracht wird, wobei Schritt b) unter Verwendung der mindestens einen Markierung (190) auf der Rückfläche (152, 152') des Brillenglases (120, 120') durchgeführt wird.

16. Verfahren (110) nach dem vorangehenden Anspruch, wobei vor Schritt b) mindestens eine weitere Markierung (198) auf die Vorderfläche (162, 162') des Brillenglases (120, 120') unter Verwendung des mindestens einen dritten Datensatzes aufgebracht wird.

17. System zur Herstellung eines an eine Brillenfassung (118) einer Brille (112) angepassten mindestens einen Brillenglases (120, 120'), umfassend
- mindestens eine erste Vorrichtung, die zur Bestimmung mindestens eines Zentrierwerts (126) eingerichtet ist;
- mindestens eine zweite Vorrichtung, die zur Bestimmung eines dreidimensionalen Modells der Brillenfassung (118) eingerichtet ist;
- mindestens eine dritte Vorrichtung, die zur Bestimmung mindestens eines geometrischen Wertes mindestens einer Fläche des mindestens einen Brillenglases (120, 120`) eingerichtet ist;
- mindestens eine erste Auswerteeinheit, umfassend:
o mindestens eine erste Eingangsschnittstelle, die zum Empfang des mindestens eines Zentrierwerts (126) und des dreidimensionalen Modells der Brillenfassung (118) eingerichtet ist;
o mindestens eine erste Berechnungseinheit, die zum Ermitteln mindestens eines ersten Datensatzes eingerichtet ist, wobei der erste Datensatz zumindest folgende Datenwerte umfasst: mindestens einen Zentrierwert (126); ein dreidimensionales Modell der Brillenfassung (118);
o mindestens eine erste Ausgangsschnittstelle, die zum Bereitstellen des mindestens einen ersten Datensatzes eingerichtet ist;
- mindestens eine zweite Auswerteeinheit, umfassend:
o mindestens eine zweite Schnittstelle, die zum Empfang des mindestens einen ersten Datensatzes und des mindestens eines geometrischen Werts der mindestens einen Fläche des mindestens einen Brillenglases (120, 120') eingerichtet ist;
o mindestens eine zweite Berechnungseinheit, die zum Ermitteln mindestens eines zweiten Datensatzes unter Verwendung des mindestens einen ersten Datensatzes eingerichtet ist, wobei der zweite Datensatz zumindest folgende Datenwerte umfasst: mindestens einen geometrischen Wert mindestens einer Fläche des mindestens einen Brillenglases (120, 120`);
o mindestens eine zweite Ausgangsschnittstelle, die zum Bereitstellen des mindestens einen zweiten Datensatzes eingerichtet ist;
**dadurch gekennzeichnet,**
**dass** das System umfasst
- mindestens eine dritte Auswerteeinheit, umfassend:
o mindestens eine dritte Eingangsschnittstelle, die zum Empfang des mindestens eines ersten Datensatzes und des mindestens einen zweiten Datensatzes eingerichtet ist;
o mindestens eine dritte Berechnungseinheit, die zum Ermitteln mindestens eines dritten Datensatzes zum Herstellen des mindestens einen Brillenglases (120, 120') aus mindestens einem Brillenglasrohling und zum Einschleifen und/oder Einbringen des mindestens einen Brillenglases (120, 120') in die Brillenfassung (118) unter Verwendung des mindestens einen ersten Datensatzes und des mindestens einen zweiten Datensatzes eingerichtet ist;
o mindestens eine dritte Ausgangsschnittstelle, die zum Bereitstellen des mindestens einen dritten Datensatzes eingerichtet ist,
- mindestens eine Steuerungseinheit, umfassend:
o mindestens eine vierte Schnittstelle, die zum Empfang des mindestens einen dritten Datensatzes eingerichtet ist;
o mindestens eine Herstellungseinheit, die zum Herstellen des mindestens einen Brillenglases (120, 120') aus dem mindestens einem Brillenglasrohling und zum Einschleifen und/oder Einbringen des mindestens einen Brillenglases (120, 120') in die Brillenfassung (118) unter Verwendung des mindestens einen dritten Datensatzes eingerichtet ist,
wobei die Datenwerte jedes Datensatzes dadurch einen räumlichen Bezug zueinander aufweisen, dass die Datenwerte jedes Datensatzes durchgehend in Bezug auf ein jeweiliges Koordinatensystem angegeben werden, wobei der räumliche Bezug dadurch erreicht wird, dass jede Berechnungseinheit dazu eingerichtet ist, die Datenwerte jedes Datensatzes in einem für alle Datensätze gemeinsamen Koordinatensystem (132) anzugeben.

18. System nach dem vorangehenden Anspruch 17, **dadurch gekennzeichnet, dass** die mindestens eine erste Auswerteeinheit ferner ein erstes Speichermedium, das zur Speicherung des mindestens einen ersten Datensatzes eingerichtet ist, umfasst.

19. System nach einem der Ansprüche 17 oder 18, **dadurch gekennzeichnet, dass** die mindestens eine zweite Auswerteeinheit ferner ein zweites Speichermedium, das zur Speicherung des mindestens einen zweiten Datensatzes eingerichtet ist, umfasst.

20. System nach einem der Ansprüche 17-19 **dadurch gekennzeichnet, dass** die mindestens eine dritte Auswerteeinheit ferner ein drittes Speichermedium, das zur Speicherung des mindestens einen dritten Datensatzes eingerichtet ist, umfasst.

## Claims

1. Computer-implemented method (125) for generating data for the production of at least one spectacle lens (120, 120') adapted to a spectacle frame (118) of a pair of spectacles (112), the computer-implemented method comprising the following steps:
(i) providing at least one first data set stored on a storage medium, the first data set comprising at least the following data values:
- at least one centering value (126);
- a three-dimensional model (128) of the spectacle frame (118);
(ii) creating at least one second data set stored on a storage medium using the at least one first data set, the second data set comprising at least the following data values:
- at least one geometric value of at least one surface of the at least one spectacle lens (120, 120');
**characterized in that** the method comprises the
following step:
(iii) creating at least one third data set stored on a storage medium for producing the at least one spectacle lens (120, 120') from at least one spectacle lens blank (178) and for grinding and/or fitting the at least one spectacle lens (120, 120') into the spectacle frame (118) using the at least one first data set and the at least one second data set, wherein the at least one third data set is a production data set, each data value of the at least one third data set comprising at least one piece of information relating to the production of the at least one spectacle lens (120, 120') or to grinding and/or fitting the at least one spectacle lens (120, 120') into the spectacle frame (118), wherein the information is used in a method for producing at least one pair of spectacles (112),
wherein the data values of each data set have a spatial relationship with one another **in that** the data values of each data set are consistently specified in relation to a respective coordinate system, with all data values of each data set being specified in a coordinate system (132) common to all data sets.

2. Computer-implemented method (125) according to the preceding claim, **characterized in that** the common coordinate system (132) is selected from a coordinate system which relates to a position of the at least one pupil of the at least one eye (114, 114') of the user (116) and the line of sight (150, 150') extending therefrom of the at least one eye (114, 114') of the user (116) through the at least one spectacle lens (120, 120').

3. Computer-implemented method (125) according to the preceding claim, **characterized in that** an own coordinate system, which relates to a position of the respective pupil of the relevant eye (114, 114') of the user (116) and the line of sight (150, 150') extending therefrom of the relevant eye (114, 114') of the user (116) through the associated spectacle lens (120, 120'), is chosen for each of the two eyes (114, 114') of the user (116).

4. Computer-implemented method (125) according to one of the two preceding claims, **characterized in that** the own coordinate system for each of the two eyes has
- a first axis parallel to a line of sight (150, 150') of the eye (114, 114') of the user (116);
- a second axis perpendicular to the first axis parallel to the direction of gravity; and
- a third axis perpendicular to both the first axis and the second axis.

5. Computer-implemented method (125) according to one of the preceding claims, **characterized in that** the at least one centering value (126) is determined by creating a centering record with the spectacle frame (118) put on by the user (116), while the user adopts the habitual head and body posture and a fixed line of sight through at least one dummy lens (130) fitted into the spectacle frame (118).

6. Computer-implemented method (125) according to one of the preceding claims, **characterized in that** the at least one centering value (126) comprises at least one of the following data values:
- at least one distance (146, 146') from a corneal vertex (148, 148') of at least one eye (114, 114') of the user to a visual point (138, 138') of at least one line of sight (150, 150') through at least one surface of the spectacle lens (120, 120');
- at least one distance (146, 146') from the visual point (138, 138') to a straight line (140) through at least one lowest point (142, 142') of a frame edge curve (144) of the spectacle frame (118) or an edge curve of the at least one spectacle lens (120, 120')
- at least one horizontal distance between an identical position on each of the two spectacle lenses (120, 120').

7. Computer-implemented method (125) according to the preceding claim, **characterized in that** the three-dimensional model (128) of the spectacle frame (118) comprises a multiplicity of data points relating to the frame edge curve (144) of the spectacle frame (118).

8. Computer-implemented method (125) according to the preceding claim, **characterized in that** the multiplicity of data points are recorded by measuring using the spectacle frame (118) or are selected from provided spatial design data of the spectacle frame (118).

9. Computer-implemented method (125) according to one of the preceding claims, **characterized in that** the geometric data values relate to a spatial shape of the spectacle lens (120, 120'), wherein the three-dimensional shape of the spectacle lens (120, 120') comprises a spherical or aspherically rotationally symmetrical convex front surface (162, 162') and a back surface (152, 152') of the spectacle lens (120, 120') designed for correcting at least one refractive error of at least one eye (114, 114') of the user (116).

10. Computer-implemented method (125) according to the preceding claim, **characterized in that**, starting from a determined starting surface, at least one optimization step (164) for determining the back surface (152, 152') for the user (116) is performed, wherein the at least one centering value (126) from the at least one first data set is used as a boundary condition for the at least one optimization step (164).

11. Computer-implemented method (125) according to the preceding claim, **characterized in that** the at least one second data set comprises at least one further data value that specifies a lens selection for the at least one spectacle lens (120, 120').

12. Computer program for carrying out a computer-implemented method (125) according to one of claims 1 to 11.

13. Method (110) for producing a pair of spectacles (112), the method (110) comprising the following steps:
(I) generating data for the production of at least one spectacle lens (120, 120') adapted to a spectacle frame (118) of a pair of spectacles (112) according to a computer-implemented method (125) according to one of claims 1 to 11;
(II) producing the at least one spectacle lens (120, 120') from at least one spectacle lens blank (178) and grinding and/or fitting the at least one spectacle lens (120, 120') into the spectacle frame (118) using the third data set of the data generated according to step (I).

14. Method (110) according to the preceding claim, wherein the production of the at least one spectacle lens (120, 120') from the at least one spectacle lens blank (178) comprises the following steps:
a) inserting a spectacle lens blank (178) into a holding device for fixing the spectacle lens blank (178);
b) machining a lateral edge (192) of the spectacle lens blank (178), whereby an edge shape of the spectacle lens (120, 120') is determined;
c) machining at least one surface of the spectacle lens blank (178), whereby a corrective effect of the spectacle lens (120, 120') is obtained;
wherein steps a) to c) are each performed using the at least one third data set.

15. Method (110) according to the preceding claim, wherein before step b) at least one marking (190) is applied to the back surface (152, 152') of the spectacle lens (120, 120') using the at least one third data set, step b) being carried out using the at least one marking (190) on the back surface (152, 152') of the spectacle lens (120, 120').

16. Method (110) according to the preceding claim, wherein before step b) at least one further marking (198) is applied to the front surface (162, 162') of the spectacle lens (120, 120') using the at least one third data set.

17. System for producing at least one spectacle lens (120, 120') adapted to a spectacle frame (118) of a pair of spectacles (112), comprising
- at least one first device, which is set up for determining at least one centering value (126);
- at least one second device, which is set up for determining a three-dimensional model of the spectacle frame (118);
- at least one third device, which is set up for determining at least one geometric value of at least one surface of the at least one spectacle lens (120, 120');
- at least one first evaluation unit, comprising:
O at least one first input interface, which is set up for receiving the at least one centering value (126) and the three-dimensional model of the spectacle frame (118);
O at least one first calculation unit, which is set up for ascertaining at least one first data set, the first data set comprising at least the following data values: at least one centering value (126); a three-dimensional model of the spectacle frame (118);
O at least one first output interface, which is set up for providing the at least one first data set;
- at least one second evaluation unit, comprising:
O at least one second interface, which is set up for receiving the at least one first data set and the at least one geometric value of the at least one surface of the at least one spectacle lens (120, 120');
O at least one second calculation unit, which is set up for ascertaining at least one second data set using the at least one first data set, the second data set comprising at least the following data values: at least one geometric value of at least one surface of the at least one spectacle lens (120, 120');
O at least one second output interface, which is set up for providing the at least one second data set;
**characterized**
**in that** the system comprises
- at least one third evaluation unit, comprising:
O at least one third input interface, which is set up for receiving the at least one first data set and the at least one second data set;
O at least one third calculation unit, which is set up for ascertaining at least one third data set for producing the at least one spectacle lens (120, 120') from at least one spectacle lens blank and for grinding and/or fitting the at least one spectacle lens (120, 120') into the spectacle frame (118 ) using the at least one first data set and the at least one second data set;
O at least one third output interface, which is set up for providing the at least one third data set;
- at least one control unit, comprising:
O at least one fourth interface, which is set up for receiving the at least one third data set;
O at least one production unit, which is set up for producing the at least one spectacle lens (120, 120') from the at least one spectacle lens blank and for grinding and/or fitting the at least one spectacle lens (120, 120') into the spectacle frame (118) using the at least one third data set,
wherein the data values of each data set have a spatial relationship with one another in that the data values of each data set are consistently specified in relation to a respective coordinate system, the spatial relationship being achieved in that each calculation unit is set up to specify the data values of each data set in a coordinate system (132) common to all data sets.

18. System according to Claim 17, **characterized in that** the at least one first evaluation unit also comprises a first storage medium, which is set up for storing the at least one first data set.

19. System according to Claim 17 or 18, **characterized in that** the at least one second evaluation unit also comprises a second storage medium, which is set up for storing the at least one second data set.

20. System according to Claims 17-19, **characterized in that** the at least one third evaluation unit also comprises a third storage medium, which is set up for storing the at least one third data set.

## Revendications

1. Procédé mis en œuvre par ordinateur (125) permettant de générer des données pour la fabrication d'au moins un verre de lunettes (120, 120') adapté à une monture de lunettes (118) d'une paire de lunettes (112), le procédé mis en œuvre par ordinateur comprenant les étapes suivantes consistant à :
(i) fournir au moins un premier ensemble de données stocké sur un support de stockage, le premier ensemble de données comprenant au moins les valeurs de données suivantes :
- au moins une valeur de centrage (126) ;
- un modèle tridimensionnel (128) de la monture de lunettes (118) ;
(ii) créer au moins un deuxième ensemble de données stocké sur un support de stockage en utilisant ledit au moins un premier ensemble de données, le deuxième ensemble de données comprenant au moins les valeurs de données suivantes :
- au moins une valeur géométrique d'au moins une face dudit au moins un verre de lunettes (120, 120') ;
**caractérisé en ce que** le procédé comprend l'étape suivante consistant à :
(iii) créer au moins un troisième ensemble de données stocké sur un support de stockage pour fabriquer ledit au moins un verre de lunettes (120, 120') à partir d'au moins une ébauche de verre de lunettes (178) et pour roder et/ou insérer ledit au moins un verre de lunettes (120, 120') dans la monture de lunettes (118) en utilisant ledit au moins un premier ensemble de données et ledit au moins un deuxième ensemble de données, dans lequel ledit au moins un troisième ensemble de données est un ensemble de données de fabrication, dans lequel chaque valeur de données dudit au moins un troisième ensemble de données comprend au moins une information concernant la fabrication dudit au moins un verre de lunettes (120, 120') ou le rodage et/ou l'insertion dudit au moins un verre de lunettes (120, 120') dans la monture de lunettes (118), l'information étant utilisée dans un procédé de fabrication d'au moins une paire de lunettes (112),
dans lequel les valeurs de données de chaque ensemble de données présentent une relation spatiale les unes par rapport aux autres **en ce que** les valeurs de données de chaque ensemble de données sont indiquées de manière cohérente par rapport à un système de coordonnées respectif, dans lequel toutes les valeurs de données de chaque ensemble de données sont indiquées dans un système de coordonnées (132) commun à tous les ensembles de données.

2. Procédé mis en œuvre par ordinateur (125) selon la revendication précédente, **caractérisé en ce que** le système de coordonnées commun (132) est sélectionné parmi un système de coordonnées qui se réfère à une position de ladite au moins une pupille dudit au moins un œil (114, 114') de l'utilisateur (116) et à la direction du regard (150, 150') partant de celle-ci dudit au moins un œil (114, 114') de l'utilisateur (116) à travers ledit au moins un verre de lunettes (120, 120').

3. Procédé mis en œuvre par ordinateur (125) selon la revendication précédente, **caractérisé en ce que** pour chacun des deux yeux (114, 114') de l'utilisateur (116) un système de coordonnées particulier est choisi qui fait référence à une position de la pupille respective de l'œil concerné (114, 114') de l'utilisateur (116) et à la direction du regard (150, 150') partant de celle-ci de l'œil concerné (114, 114') de l'utilisateur (116) à travers le verre de lunettes (120, 120') associé.

4. Procédé mis en œuvre par ordinateur (125) selon l'une des deux revendications précédentes, **caractérisé en ce que** le système de coordonnées particulier présente pour chacun des deux yeux
- un premier axe parallèle à une direction du regard (150, 150') de l'œil (114, 114') de l'utilisateur (116) ;
- un deuxième axe perpendiculaire au premier axe parallèle à la direction de la gravitation ; et
- un troisième axe perpendiculaire à la fois au premier axe et au deuxième axe.

5. Procédé mis en œuvre par ordinateur (125) selon l'une quelconque des revendications précédentes, **caractérisé en ce que** une détermination de ladite au moins une valeur de centrage (126) est effectuée par la création d'une prise de vue de centrage avec la monture de lunettes (118) chaussée par l'utilisateur (116) avec une posture normale de la tête et du corps et une direction du regard définie de l'utilisateur à travers au moins un disque de support (130) introduit dans la monture de lunettes (118).

6. Procédé mis en œuvre par ordinateur (125) selon l'une quelconque des revendications précédentes, **caractérisé en ce que** ladite au moins une valeur de centrage (126) comprend au moins l'une des valeurs de données suivantes :
- au moins une distance (146, 146') d'un sommet de la cornée (148, 148') d'au moins un œil (114, 114') de l'utilisateur jusqu'à un point de regard (138, 138') d'au moins une direction du regard (150, 150') à travers au moins une face du verre de lunettes (120, 120') ;
- au moins une distance (146, 146') du point de regard (138, 138') jusqu'à une droite (140) à travers au moins un point le plus bas (142, 142') d'une courbe de bord de monture (144) de la monture de lunettes (118) ou d'une courbe de bord dudit au moins un verre de lunettes (120, 120') ;
- au moins une distance horizontale entre respectivement une position identique sur chacun des deux verres de lunettes (120, 120').

7. Procédé mis en œuvre par ordinateur (125) selon la revendication précédente, **caractérisé en ce que** le modèle tridimensionnel (128) de la monture de lunettes (118) comprend une pluralité de points de données qui concernent la courbe de bord de monture (144) de la monture de lunettes (118).

8. Procédé mis en œuvre par ordinateur (125) selon la revendication précédente, **caractérisé en ce que** la pluralité des points de données est détectée par des techniques de mesure en utilisant la monture de lunettes (118) ou est sélectionnée parmi des données de construction spatiales fournies de la monture de lunettes (118).

9. Procédé mis en œuvre par ordinateur (125) selon l'une quelconque des revendications précédentes, **caractérisé en ce que** les valeurs de données géométriques se réfèrent à une forme spatiale du verre de lunettes (120, 120'), dans lequel la forme spatiale du verre de lunettes (120, 120') comprend une face avant (162, 162') convexe, sphérique ou asphérique, à symétrie de rotation, et une face arrière (152, 152') du verre de lunettes (120, 120'), réalisée pour corriger au moins un défaut de réfraction d'au moins un œil (114, 114') de l'utilisateur (116).

10. Procédé mis en œuvre par ordinateur (125) selon la revendication précédente, **caractérisé en ce qu'**en partant d'une face de départ définie, au moins une étape d'optimisation (164) est effectuée pour déterminer la face arrière (152, 152') pour l'utilisateur (116), dans lequel ladite au moins une valeur de centrage (126) dudit au moins un premier ensemble de données est utilisée en tant que contrainte pour ladite au moins une étape d'optimisation (164).

11. Procédé mis en œuvre par ordinateur (125) selon la revendication précédente, **caractérisé en ce que** ledit au moins un deuxième ensemble de données comprend au moins une autre valeur de données qui indique une sélection de verre pour ledit au moins un verre de lunettes (120, 120').

12. Programme informatique permettant d'exécuter un procédé (125) mis en œuvre par ordinateur selon l'une quelconque des revendications 1 à 11.

13. Procédé (110) permettant de fabriquer une paire de lunettes (112), dans lequel le procédé (110) comprend les étapes suivantes consistant à :
(I) générer des données pour la fabrication d'au moins un verre de lunettes (120, 120') adapté à une monture de lunettes (118) d'une paire de lunettes (112) selon un procédé (125) mis en œuvre par ordinateur selon l'une quelconque des revendications 1 à 11 ;
(II) fabriquer ledit au moins un verre de lunettes (120, 120') à partir d'au moins une ébauche de verre de lunettes (178) et roder et/ou insérer ledit au moins un verre de lunettes (120, 120') dans la monture de lunettes (118) en utilisant le troisième ensemble de données des données générées selon l'étape (I).

14. Procédé (110) selon la revendication précédente, dans lequel la fabrication dudit au moins un verre de lunettes (120, 120) à partir de ladite au moins une ébauche de verre de lunettes (178) comprend les étapes suivantes consistant à :
a) insérer une ébauche de verre de lunettes (178) dans un équipement de retenue pour fixer l'ébauche de verre de lunettes (178) ;
b) usiner un bord latéral (192) de l'ébauche de verre de lunettes (178) de façon à définir une forme de bord du verre de lunettes (120, 120') ;
c) usiner au moins une face de l'ébauche de verre de lunettes (178) de façon à obtenir un effet de correction du verre de lunettes (120, 120') ;
dans lequel les étapes a) à c) sont respectivement exécutées en utilisant ledit au moins un troisième ensemble de données.

15. Procédé (110) selon la revendication précédente, dans lequel avant l'étape b), au moins un marquage (190) est appliqué à la face arrière (152, 152') du verre de lunettes (120, 120') en utilisant ledit au moins un troisième ensemble de données, dans lequel l'étape b) est exécutée en utilisant ledit au moins un marquage (190) sur la face arrière (152, 152') du verre de lunettes (120, 120').

16. Procédé (110) selon la revendication précédente, dans lequel avant l'étape b), au moins un autre marquage (198) est appliqué à la face avant (162, 162') du verre de lunettes (120, 120') en utilisant ledit au moins un troisième ensemble de données.

17. Système permettant de fabriquer au moins un verre de lunettes (120, 120') adapté à une monture de lunettes (118) d'une paire de lunettes (112), comprenant
- au moins un premier dispositif qui est conçu pour déterminer au moins une valeur de centrage (126) ;
- au moins un deuxième dispositif qui est conçu pour déterminer un modèle tridimensionnel de la monture de lunettes (118) ;
- au moins un troisième dispositif qui est conçu pour déterminer au moins une valeur géométrique d'au moins une face dudit au moins un verre de lunettes (120, 120') ;
- au moins une première unité d'évaluation, comprenant :
o au moins une première interface d'entrée qui est conçue pour recevoir ladite au moins une valeur de centrage (126) et le modèle tridimensionnel de la monture de lunettes (118) ;
o au moins une première unité de calcul qui est conçue pour établir au moins un premier ensemble de données, dans lequel le premier ensemble de données comprend au moins les valeurs de données suivantes : au moins une valeur de centrage (126) ; un modèle tridimensionnel de la monture de lunettes (118) ;
o au moins une première interface de sortie qui est conçue pour fournir ledit au moins un premier ensemble de données ;
- au moins une deuxième unité d'évaluation, comprenant :
o au moins une deuxième interface qui est conçue pour recevoir ledit au moins un premier ensemble de données et ladite au moins une valeur géométrique de ladite au moins une face dudit au moins un verre de lunettes (120, 120') ;
o au moins une deuxième unité de calcul qui est conçue pour établir au moins un deuxième ensemble de données en utilisant ledit au moins un premier ensemble de données, dans lequel le deuxième ensemble de données comprend au moins les valeurs de données suivantes : au moins une valeur géométrique d'au moins une face dudit au moins un verre de lunettes (120, 120') ;
o au moins une deuxième interface de sortie qui est conçue pour fournir ledit au moins un deuxième ensemble de données ;
**caractérisé en ce que** le système comprend
- au moins une troisième unité d'évaluation, comprenant :
o au moins une troisième interface d'entrée qui est conçue pour recevoir ledit au moins un premier ensemble de données et ledit au moins un deuxième ensemble de données ;
o au moins une troisième unité de calcul qui est conçue pour établir au moins un troisième ensemble de données pour fabriquer ledit au moins un verre de lunettes (120, 120') à partir d'au moins une ébauche de verre de lunettes et pour roder et/ou insérer ledit au moins un verre de lunettes (120, 120') dans la monture de lunettes (118) en utilisant ledit au moins un premier ensemble de données et ledit au moins un deuxième ensemble de données ;
o au moins une troisième interface de sortie qui est conçue pour fournir ledit au moins un troisième ensemble de données ;
- au moins une unité de commande, comprenant :
o au moins une quatrième interface qui est conçue pour recevoir ledit au moins un troisième ensemble de données ;
o au moins une unité de fabrication qui est conçue pour fabriquer ledit au moins un verre de lunettes (120, 120') à partir de ladite au moins une ébauche de verre de lunettes et pour roder et/ou insérer ledit au moins un verre de lunettes (120, 120') dans la monture de lunettes (118) en utilisant ledit au moins un troisième ensemble de données,
dans lequel les valeurs de données de chaque ensemble de données présentent une relation spatiale les unes par rapport aux autres **en ce que** les valeurs de données de chaque ensemble de données sont de manière cohérente indiquées par rapport à un système de coordonnées respectif, dans lequel la relation spatiale est obtenue **en ce que** chaque unité de calcul est conçue pour indiquer les valeurs de données de chaque ensemble de données dans un système de coordonnées (132) commun à tous les ensembles de données.

18. Système selon la revendication précédente 17, **caractérisé en ce que** ladite au moins une première unité d'évaluation comprend en outre un premier support de stockage qui est conçu pour stocker ledit au moins un premier ensemble de données.

19. Système selon l'une quelconque des revendications 17 ou 18, **caractérisé en ce que** ladite au moins une deuxième unité d'évaluation comprend en outre un deuxième support de stockage qui est conçu pour stocker ledit au moins un deuxième ensemble de données.

20. Système selon l'une quelconque des revendications 17 à 19, **caractérisé en ce que** ladite au moins une troisième unité d'évaluation comprend en outre un troisième support de stockage qui est conçu pour stocker ledit au moins un troisième ensemble de données.
